# EUROPEAN PATENT APPLICATION

(11) **EP 4 769 065 A1**
(43) Date of publication of application: **01.07.2026**
(21) Application number: 25829478.4
(22) Date of filing: 09.05.2025
(51) Int. Cl.: G06F 1/16, H04M 1/02

(54) **ELECTRONIC DEVICE**

(30) Priority: 18.06.2024 CN 202410784056
(71) Applicant: Honor Device Co., Ltd., Shenzhen 518040 (CN)
(72) Inventor: GONG, Wenqiang, Shenzhen, Guangdong 518040 (CN); DONG, Shaohong, Shenzhen, Guangdong 518040 (CN); CHEN, Ruihao, Shenzhen, Guangdong 518040 (CN)
(74) Representative: Goddar, Heinz J.
(86) International application number: PCT/CN2025/093742
(87) International publication number: WO 2025/260996

(57) **Abstract**

This application provides an electronic device, including a first housing, a second housing, and a rotation mechanism. The rotation mechanism includes a middle beam, a first rotation portion, a second rotation portion, and a door panel assembly. An end of the first rotation portion is rotatably connected to the middle beam, and another end of the first rotation portion extends into the first housing and is connected to the first housing. An end of the second rotation portion is rotatably connected to the middle beam, and another end of the second rotation portion extends into the second housing and is connected to the second housing. The door panel assembly includes a middle door panel, a first door panel, and a second door panel. The middle door panel is connected to the middle beam, the first door panel is fixedly connected to the first rotation portion and is slidably connected to the first housing, an end of the first door panel away from the middle door panel is located in the first housing, the second door panel is fixedly connected to the second rotation portion and is slidably connected to the second housing, and an end of the second door panel away from the middle door panel is located in the second housing. When the first housing and the second housing are unfolded relative to each other, at least a part of the middle door panel is arranged on a same layer as a first rear cover of the first housing and a second rear cover of the second housing. The technical solutions of this application can enhance strength of the middle beam.

## Description

This application claims priority to Chinese Patent Application No. 202410784056.4, filed with the China National Intellectual Property Administration on June 18, 2024 and entitled "ELECTRONIC DEVICE", which is incorporated herein by reference in its entirety.

### TECHNICAL FIELD

This application relates to the technical field of electronic devices, and in particular, to an electronic device.

### BACKGROUND

As flexible foldable screen technologies become increasingly mature, foldable terminal products (such as foldable mobile phones, foldable tablets, and foldable computers) are increasingly widely applied. In a foldable terminal product, a middle beam in a rotating shaft is a primary bearing component of the rotating shaft, each swing arm in the rotating shaft forms a kinematic pair connection with the middle beam, and even a synchronization mechanism and a damping mechanism may be arranged in the middle beam. Therefore, strength and rigidity of the middle beam directly affect reliability of an entire shaft, even reliability of an entire device and user experience of a consumer. The rotating shaft generally includes the middle beam and a middle decorating door panel fixed to the middle beam. Therefore, a dimension T₁ of the middle beam in a thickness direction is equal to a thickness T₀ of the entire device in a flattened state minus a thickness T₂ of a screen module minus a thickness T₃ of a battery cover minus a thickness T₄ of the middle decorating door panel. Limited by materials and manufacturing processes, the thickness of the battery cover and the thickness of the middle decorating door panel are difficult to further reduce. Therefore, with a trend of foldable devices becoming thinner and lighter, the dimension of the middle beam in the thickness direction becomes smaller and smaller. Consequently, the strength and rigidity of the middle beam become worse and worse, making it difficult to meet a reliability requirement of the entire shaft.

### SUMMARY

Embodiments of this application provide an electronic device, which can improve strength and rigidity of a middle beam and meet a reliability requirement of an entire shaft.

This application provides an electronic device, including a first housing, a second housing, and a rotation mechanism, where the first housing includes a first rear cover, the second housing includes a second rear cover, and the rotation mechanism includes a middle beam, a first rotation portion, a second rotation portion, and a door panel assembly, where
the first rotation portion and the second rotation portion are respectively located on two sides of the middle beam in a width direction, the first rotation portion is rotatably connected to the middle beam, an end of the first rotation portion away from the middle beam extends into the first housing and is fixedly connected to the first housing, the second rotation portion is rotatably connected to the middle beam, and an end of the second rotation portion away from the middle beam extends into the second housing and is fixedly connected to the second housing;
the door panel assembly includes a middle door panel, a first door panel, and a second door panel, where the middle door panel is fixedly connected to the middle beam, the first door panel is fixedly connected to the first rotation portion, an end of the first door panel away from the middle door panel is located in the first housing, the first door panel is further slidably connected to the first housing, the second door panel is fixedly connected to the second rotation portion, an end of the second door panel away from the middle door panel is located in the second housing, and the second door panel is further slidably connected to the second housing; and
when the first housing and the second housing are unfolded relative to each other, at least a part of the middle door panel is arranged on a same layer as the first rear cover and the second rear cover.

It may be understood that in the related art, a middle beam in a rotating shaft is a primary bearing component of the rotating shaft, each swing arm in the rotating shaft forms a kinematic pair connection with the middle beam, and even a synchronization mechanism and a damping mechanism may be arranged in the middle beam. Therefore, strength and rigidity of the middle beam directly affect reliability of an entire shaft, even reliability of an entire device and user experience of a consumer. The rotating shaft generally includes the middle beam and a middle decorating door panel fixed to the middle beam. Therefore, a dimension T₁ of the middle beam in a thickness direction is equal to a thickness T₀ of the entire device in a flattened state minus a thickness T₂ of a screen module minus a thickness T₃ of a battery cover minus a thickness T₄ of the middle decorating door panel. Limited by materials and manufacturing processes, the thickness of the battery cover and the thickness of the middle decorating door panel are difficult to further reduce. Therefore, with a trend of foldable devices becoming thinner and lighter, the dimension of the middle beam in the thickness direction becomes smaller and smaller. Consequently, the strength and rigidity of the middle beam become worse and worse, making it difficult to meet a reliability requirement of the rotating shaft and even the entire device.

Based on this, in this embodiment of this application, when the entire device is in the unfolded state, the at least a part of the middle door panel and the rear covers of the left and right housings are arranged on the same layer. In this way, the middle door panel can be arranged at a position with a smaller distance difference or no distance difference from the rear covers of the left and right housings in a thickness direction of the entire device, so that the position of the middle door panel can be closer to the rear covers of the left and right housings. When the entire device is in a flattened state, the position of the middle door panel is closer to the rear covers of the left and right housings, so that the position of the middle door panel can be raised to a same height as the rear covers of the left and right housings or to a smaller height difference from the rear covers of the left and right housings. In this way, in a thickness composition of the entire device, that a dimension T₁ of the middle beam in a thickness direction is equal to a thickness T₀ of the entire device in the flattened state minus a thickness T₂ of a screen module minus a thickness T₃ of a battery cover (that is, a thickness of the first rear cover and/or a thickness of the second rear cover) minus a thickness T₄ of a middle decorating door panel (that is, a thickness of the middle door panel) is adjusted to that the dimension T₁ of the middle beam in the thickness direction is equal to the thickness T₀ of the entire device in the flattened state minus the thickness T₂ of the screen module minus the thickness T₄ of the middle decorating door panel (that is, the thickness of the middle door panel).

Based on the foregoing dimension formula, when the thickness T₀ of the entire device in the flattened state, the thickness T₂ of the screen module, and the thickness T₄ of the middle decorating door panel are not changed or are changed slightly, the dimension T₁ of the middle beam in the thickness direction can be increased by one thickness T₃ of the battery cover. In this way, more arrangement spaces can be freed up for the middle beam in the thickness direction of the entire device, so that a cross-sectional area of the middle beam in the thickness direction of the entire device can be significantly increased. As the cross-sectional area of the middle beam in the thickness direction of the entire device increases, not only can the strength and rigidity of the middle beam be enhanced to an extent, but also various structures connected to the middle beam to form kinematic pair connections can be strengthened to varying degrees, thereby enhancing the entire rotation mechanism in all aspects and meeting the reliability requirement of the entire shaft. For example, by adopting the foregoing design solution, under a same design constraint, the cross-sectional area of the middle beam in the thickness direction can be increased by approximately 34%.

In addition, based on the foregoing dimension formula, when the dimension T₁ of the middle beam in the thickness direction, the thickness T₂ of the screen module, and the thickness T₄ of the middle decorating door panel are not changed or are changed slightly, the thickness T₀ of the entire device in the flattened state may be supported to be reduced by at least one thickness T₃ of the battery cover, and a thickness of the entire device in the folded state is supported to be reduced by at least two thicknesses T₃ of the battery covers. In other words, under a condition of maintaining a conventional design in which the strength and rigidity of the middle beam are not changed, the solution of the embodiments of this application can support thickness reduction of the entire device in the flattened state and the folded state, to achieve thinning of the electronic device. For example, the thickness of the battery cover is A mm, and this solution may support reducing the thickness of the entire device in the flattened state by A mm, or reducing the thickness of the entire device in the folded state by 2A mm.

In a possible implementation, the first rear cover includes a first surface, the second rear cover includes a second surface, and a surface of the middle door panel facing away from the middle beam is a middle exterior surface of the middle door panel; and
when the first housing and the second housing are unfolded relative to each other, the middle exterior surface is flush with the first surface and/or the second surface.

It may be understood that when the electronic device is in the unfolded state, the middle exterior surface of the middle door panel is arranged to be flush with the first surface of the first rear cover and the second surface of the second rear cover, so that the middle door panel can be raised in a direction away from the screen, thereby changing the position of the middle door panel. In this way, the middle door panel is changed from having a distance from the first rear cover and the second rear cover in the thickness direction of the entire device to having no distance difference or a small distance difference from the first rear cover and the second rear cover in the thickness direction of the entire device, that is, the middle door panel, the first rear cover, and the second rear cover may be arranged approximately on a same layer. Based on a connection relationship between the middle door panel and the middle beam, an end of the middle beam in contact with the middle door panel may follow the middle door panel to also be raised in the direction away from the screen. Therefore, when the thickness of the entire device in the flattened state is not changed, an increment of the dimension of the middle beam in the thickness direction is maximized, that is, a reinforcement amplitude is maximized. This further increases the cross-sectional area of the middle beam in the thickness direction, which is conducive to further improving the strength and rigidity of the middle beam and improving the reliability of the entire device, and may also improve refinement of an appearance of the electronic device and user experience of the user.

In a possible implementation, the first rear cover further includes a third surface, and the third surface and the first surface are arranged facing away from each other in a thickness direction of the first rear cover;
the second rear cover further includes a fourth surface, and the fourth surface and the second surface are arranged facing away from each other in a thickness direction of the second rear cover; and
a surface of the middle beam facing the middle door panel is flush with the third surface and/or the fourth surface.

It may be understood that the surface of the middle beam facing the middle door panel is flush with the third surface of the first rear cover and/or the fourth surface of the second rear cover, so that the middle door panel connected to the middle beam can be fully arranged on a same layer as the first rear cover and/or the second rear cover, and the middle beam can extend from a screen side of the electronic device to a rear cover side of the electronic device in the thickness direction thereof, to further increase a cross-sectional dimension of the middle beam in the thickness direction thereof. Because the thickness of the middle beam is increased, the strength, the rigidity, and the like of the middle beam are enhanced to an extent, thereby effectively improving reliability of the middle beam.

In a possible implementation, a sliding direction of the first door panel relative to the first housing is arranged inclined to the first surface.

It may be understood that because the first door panel is fixedly connected to a first swing arm, the first swing arm, when sliding relative to a first fixing bracket, drives the first door panel to also slide relative to the first housing, thereby remaining linkage between the first door panel and the first swing arm. The sliding direction of the first door panel relative to the first housing is arranged inclined to the first surface of the first rear cover, so that the sliding direction of the first door panel relative to the first housing and a sliding direction of the first swing arm relative to the first fixing bracket can remain consistent during the folding and unfolding of the rotation mechanism, that is, when the first swing arm slides along an oblique line relative to the first surface of the first housing, the first door panel also slides along an oblique line relative to the first surface of the first housing, thereby optimizing a movement trajectory of the first door panel and avoiding interference with the first rear cover.

A sliding direction of the second door panel relative to the second housing is arranged inclined to the second surface.

It may be understood that because the second door panel is fixedly connected to a second swing arm, the second swing arm, when sliding relative to a second fixing bracket, drives the second door panel to also slide relative to the second housing, thereby remaining linkage between the second door panel and the second swing arm. The sliding direction of the second door panel relative to the second housing is arranged inclined to the second surface of the second rear cover, so that the sliding direction of the second door panel relative to the second housing and a sliding direction of the second swing arm relative to the second fixing bracket can remain consistent during the folding and unfolding of the rotation mechanism, that is, when the second swing arm slides along an oblique line relative to the second surface of the second housing, the second door panel also slides along an oblique line relative to the second surface of the second housing, thereby optimizing a movement trajectory of the second door panel and avoiding interference with the second rear cover.

In a possible implementation, the first rotation portion includes the first swing arm and the first fixing bracket, where the first fixing bracket is fixedly connected to the first housing, the first swing arm is fixedly connected to the first door panel, an end of the first swing arm is rotatably connected to the middle beam, another end of the first swing arm is slidably connected to the first fixing bracket, and the sliding direction of the first swing arm relative to the first fixing bracket is arranged inclined to the first surface.

It may be understood that in the unfolded state of the entire device, an end of the first door panel close to the middle door panel is higher than the third surface of the first rear cover, and an end of the first door panel away from the middle door panel is lower than the third surface of the first rear cover. Therefore, a main body of the first door panel is arranged to be inclined in the unfolded state of the entire device. In addition, due to a fixed connection between the first door panel and the first swing arm, opening and closing actions of the first door panel need to be driven by the first swing arm, and the sliding direction of the first swing arm relative to the first fixing bracket needs to adapt to an inclined arrangement form of the first door panel.

Therefore, inclined sliding is arranged, to make the sliding direction of the first swing arm adapt to an inclined direction of the first door panel, that is, the sliding direction of the first swing arm relative to the first fixing bracket is arranged inclined to the first surface of the first rear cover. This can ensure that the opening and closing actions of the first door panel can be smooth and fluent, thereby ensuring that folding of the rotation mechanism can also be smooth and fluent, and avoiding interference between the structures.

It should be noted that to ensure that a flexible display screen remains a same length during the unfolding and folding of the entire device, a rotation center line of the first swing arm and the middle beam needs to be adjusted. A specific position of the rotation center line of the first swing arm and the middle beam may be determined according to a same-length requirement of the flexible display screen, and may be as close as possible to the middle exterior surface of the middle beam.

The second rotation portion includes the second swing arm and the second fixing bracket, where the second fixing bracket is fixedly connected to the second housing, the second swing arm is fixedly connected to the second door panel, an end of the second swing arm is rotatably connected to the middle beam, another end of the second swing arm is slidably connected to the second fixing bracket, and the sliding direction of the second swing arm relative to the second fixing bracket is arranged inclined to the second surface.

It may be understood that in the unfolded state of the entire device, an end of the second door panel close to the middle door panel is higher than the fourth surface of the second rear cover, and an end of the second door panel away from the middle door panel is lower than the fourth surface of the second rear cover. Therefore, a main body of the second door panel is arranged to be inclined in the unfolded state of the entire device. In addition, due to a fixed connection between the second door panel and the second swing arm, opening and closing actions of the second door panel need to be driven by the second swing arm, and the sliding direction of the second swing arm relative to the second fixing bracket needs to adapt to an inclined arrangement form of the second door panel.

Therefore, inclined sliding is arranged, to make the sliding direction of the second swing arm adapt to an inclined direction of the second door panel, that is, the sliding direction of the second swing arm relative to the second fixing bracket is arranged inclined to the second surface of the second rear cover. This can ensure that the opening and closing actions of the second door panel can be smooth and fluent, thereby ensuring that folding of the rotation mechanism can also be smooth and fluent, and avoiding interference between the structures.

It should be noted that to ensure that the flexible display screen remains a same length during the unfolding and folding of the entire device, a rotation center line of the second swing arm and the middle beam needs to be adjusted. A specific position of the rotation center line of the second swing arm and the middle beam may be determined according to the same-length requirement of the flexible display screen, and may be as close as possible to the middle exterior surface of the middle beam.

In a possible implementation, a first accommodating groove is formed between the first fixing bracket and the first rear cover, the first door panel is slidable in the first accommodating groove, and a cross-sectional width of the first accommodating groove in a thickness direction of the electronic device gradually increases in a direction from the middle beam to the first housing.

With this configuration, the first accommodating groove may present a structure configuration of a trapezoidal groove with a gradient in width, which is conducive to providing an action space for a sliding action of the first door panel relative to the first housing, and avoids a problem of the first door panel getting stuck due to interference with the first fixing bracket during the sliding, thereby providing good reliability.

A second accommodating groove is formed between the second fixing bracket and the second rear cover, the second door panel is slidable in the second accommodating groove, and a cross-sectional width of the second accommodating groove in the thickness direction of the electronic device gradually increases in a direction from the middle beam to the second housing.

With this configuration, the second accommodation may present a structure configuration of a trapezoidal groove with a gradient in width, which is conducive to providing an action space for a sliding action of the second door panel relative to the second housing, and avoids a problem of the second door panel getting stuck due to interference with the second fixing bracket during the sliding, thereby providing good reliability.

In a possible implementation, the first door panel includes a first exterior surface, the first exterior surface faces away from the first rotation portion, and a part of the first exterior surface is flush with the middle exterior surface when the first housing and the second housing are unfolded relative to each other; and
the second door panel includes a second exterior surface, the second exterior surface faces away from the second rotation portion, and a part of the second exterior surface is flush with the middle exterior surface when the first housing and the second housing are unfolded relative to each other.

With this configuration, end portions of the first door panel and the second door panel that are close to the middle door panel can be raised to be flush with the middle door panel, so that a gap between the first door panel and the middle door panel and a gap between the second door panel and the middle door panel can meet an appearance requirement of the electronic device, which is conducive to improving refinement of the entire device.

In a possible implementation, the middle beam includes a middle beam base and a middle beam cover plate, the middle beam cover plate is connected to a side of the middle beam base, and the middle door panel is connected to a surface of the middle beam cover plate facing away from the middle beam base; and
the middle door panel and the middle beam cover plate are connected to form an integrated structure.

It may be understood that the middle door panel and the middle beam cover plate are connected to form an integrated structure, so that the middle door panel and the middle beam cover plate may be unified into a whole. Compared with a split structure of the middle door panel and the middle beam cover plate, the integrated middle door panel and middle beam cover plate can increase a thickness of the middle beam cover plate by a thickness of one middle door panel, effectively increasing a cross-sectional area of the middle beam cover plate in a thickness direction, which further enhances overall strength and rigidity of the middle beam, and is conducive to improving the reliability of the entire shaft. For example, integrating the middle door panel with the middle beam cover plate can increase the cross-sectional area of the middle beam in the thickness direction by about 50%.

In a possible implementation, the middle beam further includes a locking member, the locking member penetrates the middle beam base and the middle beam cover plate and is fixedly connected to the middle beam base and the middle beam cover plate, and a part of the locking member is exposed on a surface of the middle beam base facing away from the middle beam cover plate.

It may be understood that due to the integration design of the middle door panel and the middle beam cover plate, to avoid damage to an appearance of the middle door panel when locking the middle beam cover plate and the middle beam base, a locking start direction of the locking member needs to avoid a side of the middle beam cover plate close to the middle door panel, and needs to be adjusted to a side of the middle beam base close to the flexible display screen. In other words, a locking direction of the locking member needs to start from a bottom portion of the middle beam base, pass a top portion of the middle beam base, and end at the middle beam cover plate.

In a possible implementation, the rotation mechanism further includes an in-screen support member, and the in-screen support member is connected to the surface of the middle beam base facing away from the middle beam cover plate and covers the locking member.

It may be understood that because the locking member performs locking in a direction from the side of the middle beam base close to the flexible display screen to the middle beam cover plate, a part of the locking member is exposed on the middle beam base when the locking member completes locking of the middle beam base and the middle beam cover plate. Therefore, arranging the in-screen support member and making the in-screen support member cover the locking member can avoid exposure of the locking member and provide a good concealing effect and a good appearance effect. In addition, by arranging the in-screen support member and making the in-screen support member cover the locking member, the in-screen support member can always be located between the flexible display screen and the locking member during unfolding and folding of the electronic device, to provide protection by separating the flexible display screen and the locking member and preventing the locking member from squeezing the flexible display screen.

In a possible implementation, the middle beam is an integrated structure.

It may be understood that the middle beam formed in the integrated structure has fewer parts, which is conducive to simplifying a manufacturing process of the middle beam and improving production and assembly efficiency of the middle beam.

In a possible implementation, the electronic device further includes the flexible display screen, where the flexible display screen is connected to the first housing, the second housing, and the rotation mechanism and is located on a side of the middle beam facing away from the middle door panel.

It may be understood that at a folding region of the flexible display screen of the outward-foldable electronic device, an outward folding amplitude is smaller than an inward folding amplitude, thereby causing less damage to the flexible display screen. When the mobile phone is flattened, there is almost no crease at the folding region, making the entire screen very smooth. This greatly enhances a texture of the electronic device and also increases a service life of the screen of the electronic device.

### BRIEF DESCRIPTION OF DRAWINGS

FIG. 1 is a diagram of a structure of an electronic device according to an embodiment of this application;
FIG. 2 is a diagram of a structure of the electronic device shown in FIG. 1 in a folded state;
FIG. 3 is a diagram of a structure of the electronic device shown in FIG. 1 in an intermediate state;
FIG. 4 is a diagram of a structure of the electronic device shown in FIG. 1 in an unfolded state;
FIG. 5 is a diagram of a structure of a rotation mechanism of the electronic device shown in FIG. 1;
FIG. 6 is a schematic exploded view of the rotation mechanism shown in FIG. 5;
FIG. 7 is a schematic partial cross-sectional view taken along a section line A-A in FIG. 4;
FIG. 8 is a diagram of a partial structure of a middle beam of the rotation mechanism shown in FIG. 5;
FIG. 9 is a diagram of another partial structure of a middle beam of the rotation mechanism shown in FIG. 5 from an angle;
FIG. 10 is a diagram of a structure of a middle beam base of a middle beam of the rotation mechanism shown in FIG. 5;
FIG. 11A is a diagram of another structure of a middle beam base of a middle beam of the rotation mechanism shown in FIG. 5;
FIG. 11B is a schematic exploded view of the middle beam base shown in FIG. 11A;
FIG. 12 is a schematic exploded view of a partial structure of the middle beam shown in FIG. 9;
FIG. 13 is a diagram of a structure of an integrated middle beam cover plate and middle door panel in the middle beam shown in FIG. 9;
FIG. 14 is a diagram of another partial structure of a middle beam of the rotation mechanism shown in FIG. 5 from another angle;
FIG. 15 is a schematic partial cross-sectional view taken along a section line B-B in FIG. 4;
FIG. 16 is a diagram of still another partial structure of a middle beam of the rotation mechanism shown in FIG. 5 from an angle;
FIG. 17 is a diagram of a partial assembly structure of a middle beam, a first rotation portion, and a second rotation portion of the rotation mechanism shown in FIG. 5;
FIG. 18 is a diagram of a structure of a first fixing bracket and a second fixing bracket of the rotation mechanism shown in FIG. 5;
FIG. 19 is a diagram of a partial assembly structure of a middle beam, a first swing arm, and a second swing arm of the rotation mechanism shown in FIG. 5;
FIG. 20A is a diagram of a structure of a first swing arm and a second swing arm of the rotation mechanism shown in FIG. 5 from an angle;
FIG. 20B is a diagram of a structure of a first swing arm and a second swing arm of the rotation mechanism shown in FIG. 5 from another angle;
FIG. 21A is a diagram of a partial structure of a first door panel and a second door panel of the rotation mechanism shown in FIG. 5 from an angle;
FIG. 21B is a diagram of a partial structure of a first door panel and a second door panel of the rotation mechanism shown in FIG. 5 from another angle;
FIG. 22 is a diagram of a partial structure of the rotation mechanism shown in FIG. 5 where a first door panel and a first swing arm are assembled and a second door panel and a second swing arm are assembled;
FIG. 23 is a schematic partial cross-sectional view taken along a section line C-C in FIG. 4;
FIG. 24 is a schematic partial cross-sectional view taken along a section line D-D in FIG. 3;
FIG. 25 is a schematic partial cross-sectional view taken along a section line E-E in FIG. 2; and
FIG. 26 is a schematic partial cross-sectional view of an electronic device in an unfolded state according to a comparative embodiment.

### DESCRIPTION OF EMBODIMENTS

For ease of understanding, terms involved in embodiments of this application are first explained.

And/Or: It describes only an association relationship for describing associated objects and represents that three relationships may exist. For example, A and/or B may represent the following three cases: Only A exists, both A and B exist, and only B exists.

A plurality of: It refers to two or more than two.

Connection: It should be understood in a broad sense. For example, a connection between A and B may be a direct connection between A and B, or an indirect connection between A and B through an intermediary.

The following clearly describes specific implementations of this application with reference to the accompanying drawings.

The embodiments of this application provide an electronic device. The electronic device may be any device with a foldable capability, which can be unfolded and closed under operation by a user. The electronic device includes, but is not limited to a mobile phone, a notebook computer, a tablet computer, a laptop computer, a handheld game console, a personal digital assistant, a wearable device, an in-vehicle device, and the like.

It may be understood that when the electronic device is a foldable mobile phone, the mobile phone may include an inward-foldable mobile phone and an outward-foldable mobile phone. At a folding region of a flexible screen of the outward-foldable mobile phone, an outward folding amplitude is smaller than an inward folding amplitude, thereby causing less damage to the flexible screen. When the mobile phone is flattened, there is almost no crease at the folding region, making the entire screen very smooth. This greatly enhances a texture of the mobile phone and also increases a service life of the screen of the mobile phone.

An example in which the electronic device is an outward-foldable mobile phone is used below for description. Certainly, in other embodiments, the electronic device may alternatively include, but is not limited to an inward-foldable mobile phone, a tablet computer, a handheld game console, an electronic reader, a wearable device, and the like. This is not strictly limited.

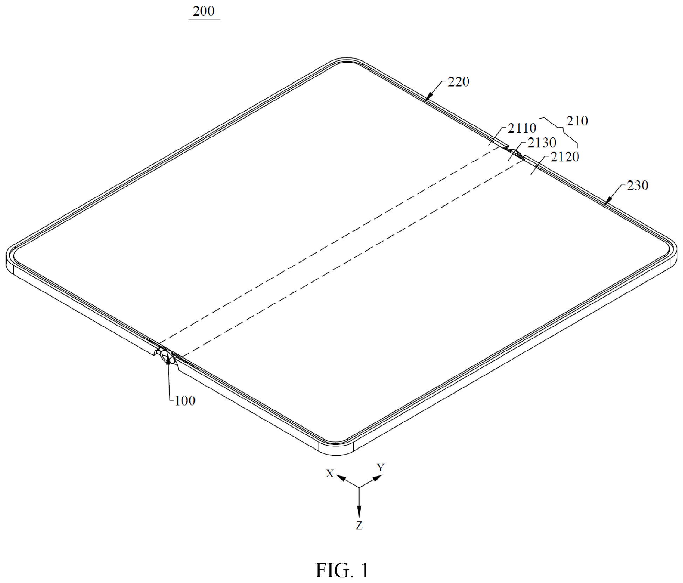

Referring to FIG. 1, FIG. 1 is a diagram of a structure of an electronic device 200 according to an embodiment of this application.

For ease of description, a length direction of the electronic device 200 is defined as an X direction, a width direction of the electronic device 200 is defined as a Y direction, and a thickness direction of the electronic device 200 is defined as a Z direction below. The X direction, the Y direction, and the Z direction are mutually perpendicular to each other.

The electronic device 200 may include a flexible display screen 210, a first housing 220, a second housing 230, and a rotation mechanism 100. The rotation mechanism 100 is connected between the first housing 220 and the second housing 230, to implement a rotational connection between the first housing 220 and the second housing 230. The first housing 220 and the second housing 230 may rotate relative to each other through the rotation mechanism 100, so that the electronic device 200 switches between a folded state, an intermediate state, and an unfolded state, to meet use demands of a user in different scenarios. An accommodating space (not shown in the figure) is further provided in the first housing 220 and the second housing 230. The accommodating space is used for accommodating electronic elements and structural elements such as a processor, a circuit board, and a camera module of the electronic device 200. The flexible display screen 210 is connected to the first housing 220, the second housing 230, and the rotation mechanism 100. The flexible display screen 210 may be driven by the first housing 220, the second housing 230, and the rotation mechanism 100 to be unfolded or folded.

The flexible display screen 210 is an outward-foldable screen. In other words, when the electronic device 200 is in the folded state, the flexible display screen 210 may form an exterior display surface of the electronic device 200. The flexible display screen 210 may be a fully foldable flexible screen, or may be a combination of a foldable flexible screen in a middle region and rigid screens at both ends. This is not strictly limited.

For example, the flexible display screen 210 may be an organic light-emitting diode (organic light-emitting diode, OLED) display screen, an active-matrix organic light-emitting diode (active-matrix organic light-emitting diode, AMOLED) display screen, a mini light-emitting diode (mini organic lightemitting diode) display screen, a micro light-emitting diode (micro organic light-emitting diode) display screen, a micro organic light-emitting diode (micro organic light-emitting diode) display screen, or a quantum dot light emitting diode (quantum dot light emitting diodes, QLED) display screen.

Specifically, the flexible display screen 210 may include a first part 2110, a second part 2120, and a foldable part 2130, and the foldable part 2130 of the flexible display screen 210 is connected between the first part 2110 of the flexible display screen 210 and the second part 2120 of the flexible display screen 210 and may be bent to be adapted to unfolding and folding of the electronic device 200. The first part 2110 of the flexible display screen 210 is connected to the first housing 220, the second part 2120 of the flexible display screen 210 is connected to the second housing 230, and the foldable part 2130 of the flexible display screen 210 is arranged opposite to the rotation mechanism 100 in the Z direction.

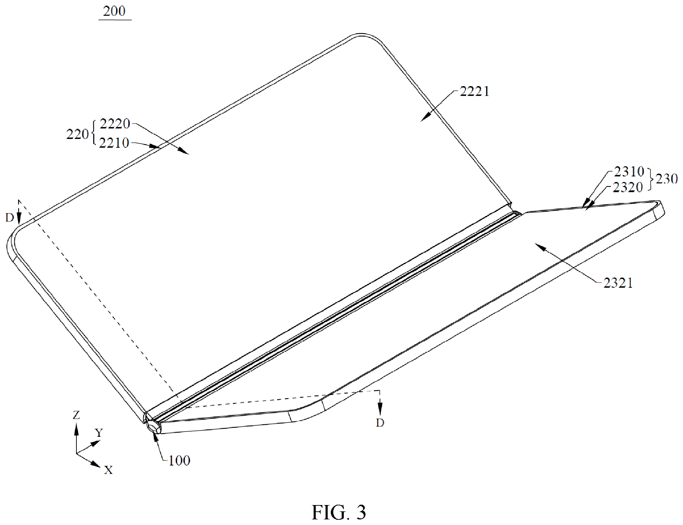

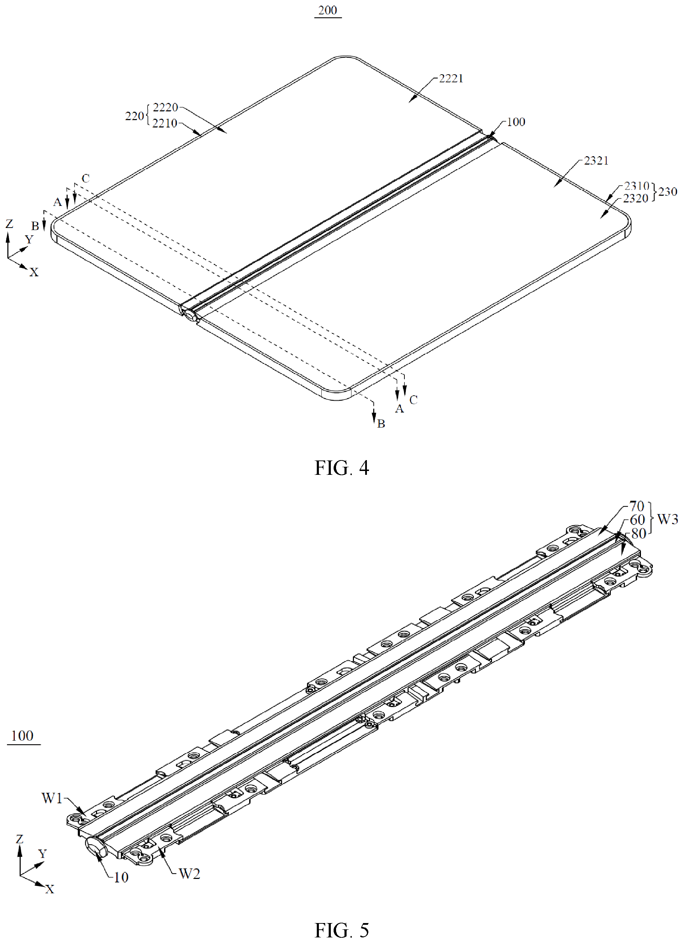

Referring to FIG. 2, FIG. 3, and FIG. 4, FIG. 2 is a diagram of a structure of the electronic device 200 shown in FIG. 1 in a folded state, FIG. 3 is a diagram of a structure of the electronic device 200 shown in FIG. 1 in an intermediate state, and FIG. 4 is a diagram of a structure of the electronic device 200 shown in FIG. 1 in an unfolded state.

The electronic device 200 shown in this embodiment of this application is an electronic device 200 that can be folded once. In some other embodiments, the electronic device 200 may alternatively be an electronic device 200 that can be folded for a plurality of times (more than twice). In this case, the electronic device 200 may include a plurality of parts. Two adjacent parts may be folded relatively close to each other until the electronic device 200 is in the folded state, and two adjacent parts may be unfolded relatively far away from each other until the electronic device 200 is in the unfolded state.

An example in which the first housing 220 and the second housing 230 are arranged in a left-right manner enabling the electronic device 200 to be folded in half from left to right is used below for description. However, it should be understood that the first housing 220 and the second housing 230 may be alternatively arranged in a top-bottom manner enabling the electronic device 200 to be folded in half from top to bottom in another embodiment.

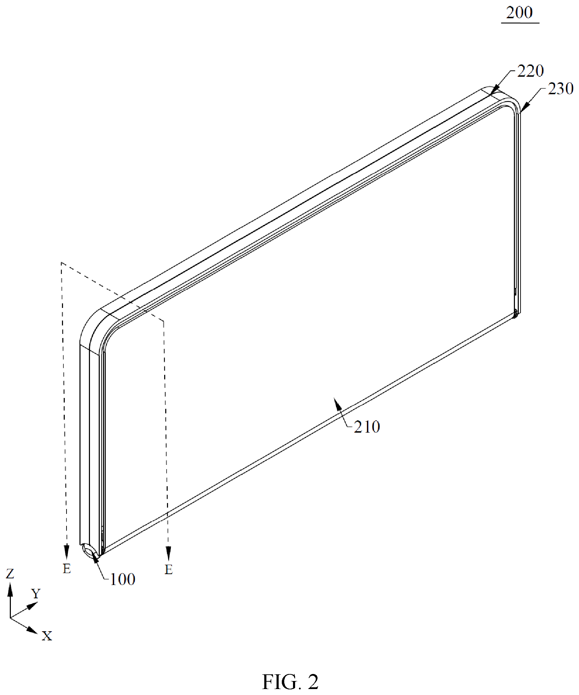

As shown in FIG. 2, the first housing 220 and the second housing 230 rotate relative to each other, causing the electronic device 200 to be in the folded state. This means that the first housing 220 and the second housing 230 rotate through the rotation mechanism 100 and get close to each other until the first housing 220 and the second housing 230 are attached. When the electronic device 200 is in the folded state, the first housing 220 and the second housing 230 may be in partial contact, or may be in full contact. In this case, the flexible display screen 210 is located on an outer side of the electronic device 200, the foldable part 2130 of the flexible display screen 210 is bent, and the first part 2110 of the flexible display screen 210 and the second part 2120 of the flexible display screen 210 are arranged facing away from each other. The electronic device 200 has a small size, making it convenient for a user to store and carry. In addition, the electronic device 200 can perform information display and be provided for user operation by using a half of the flexible display screen 210.

As shown in FIG. 3, the first housing 220 and the second housing 230 rotate relative to each other, causing the electronic device 200 to be in the intermediate state. This means that the first housing 220 and the second housing 230 rotate through the rotation mechanism 100 and get away from each other to make an included angle between the first housing 220 and the second housing 230 become larger and larger, or this means that the first housing 220 and the second housing 230 rotate through the rotation mechanism 100 and get close to each other to make an included angle between the first housing 220 and the second housing 230 become smaller and smaller. In this case, the foldable part 2130 of the flexible display screen 210 is still bent, but a bending amplitude of the foldable part 2130 of the flexible display screen 210 in the intermediate state is smaller than a bending amplitude of the foldable part 2130 of the flexible display screen 210 in the folded state.

As shown in FIG. 4, the first housing 220 and the second housing 230 rotate relative to each other, causing the electronic device 200 to be in the unfolded state. This means that the first housing 220 and the second housing 230 rotate through the rotation mechanism 100 and get away from each other, and an included angle between the first housing 220 and the second housing 230 continues to increase and can approach 180 degrees or be equal to 180 degrees (within an allowable tolerance range). In this case, the foldable part 2130 of the flexible display screen 210 is flattened, the first part 2110 of the flexible display screen 210 and the second part 2120 of the flexible display screen 210 are unfolded relative to each other, and the electronic device 200 can implement large-screen display, provide richer information to the user, and deliver better user experience to the user.

Referring to FIG. 1 to FIG. 4, the first housing 220 may include a first middle frame 2210 and a first rear cover 2220. The first rear cover 2220 and the first part 2110 of the flexible display screen 210 are respectively connected to two sides of the first middle frame 2210 that face away from each other in a thickness direction, so that the first rear cover 2220 and the first part 2110 of the flexible display screen 210 are arranged opposite to each other in a direction opposite to the Z direction. The first rear cover 2220 may be understood as a battery cover of the electronic device 200.

The first rear cover 2220 may include a first surface 2221 and a third surface (not shown in the figure). The first surface 2221 of the first rear cover 2220 is a surface of the first rear cover 2220 exposed on an outer part of the electronic device 200, or may be understood as a large surface of the first housing 220 exposed on the outer part of the electronic device 200 (a surface with a largest area of the first housing 220 exposed on the outer part of the electronic device 200). The third surface of the first rear cover 2220 is a surface of the first rear cover 2220 facing an inner part of the electronic device 200. The first surface 2221 of the first rear cover 2220 and the third surface of the first rear cover 2220 are arranged facing away from each other in a thickness direction of the first rear cover 2220 (that is, the direction opposite to the Z direction).

The second housing 230 may include a second middle frame 2310 and a second rear cover 2320. The second rear cover 2320 and the second part 2120 of the flexible display screen 210 are respectively connected to two sides of the second middle frame 2310 that face away from each other in a thickness direction, so that the second rear cover 2320 and the second part 2120 of the flexible display screen 210 are arranged opposite to each other in the direction opposite to the Z direction. The second rear cover 2320 may be understood as a battery cover of the electronic device 200.

The second rear cover 2320 may include a second surface 2321 and a fourth surface (not shown in the figure). The second surface 2321 of the second rear cover 2320 is a surface of the second rear cover 2320 exposed on the outer part of the electronic device 200, or may be understood as a large surface of the second housing 230 exposed on the outer part of the electronic device 200 (a surface with a largest area of the second housing 230 exposed on the outer part of the electronic device 200). The fourth surface of the second rear cover 2320 is a surface of the second rear cover 2320 facing the inner part of the electronic device 200. The second surface 2321 of the second rear cover 2320 and the fourth surface of the second rear cover 2320 are arranged facing away from each other in a thickness direction of the second rear cover 2320 (that is, the direction opposite to the Z direction).

When the electronic device 200 is in the unfolded state, the first housing 220 and the second housing 230 are unfolded relative to each other, and the first rear cover 2220 of the first housing 220 and the second rear cover 2320 of the second housing 230 may be arranged on a same layer. A gap region between the first rear cover 2220 of the first housing 220 and the second rear cover 2320 of the second housing 230 may be provided for accommodating a part of the rotation mechanism 100, thereby making full use of a space in the electronic device 200 and improving space utilization of the electronic device 200.

In addition, when the electronic device 200 is in the unfolded state, the first surface 2221 of the first rear cover 2220 and the second surface 2321 of the second rear cover 2320 may be flush, and the third surface 2222 of the first rear cover 2220 and the fourth surface 2322 of the second rear cover 2320 may be flush. That the first surface 2221 of the first rear cover 2220 and the second surface 2321 of the second rear cover 2320 are flush means that the first surface 2221 of the first rear cover 2220 and the second surface 2321 of the second rear cover 2320 are coplanar, or a height difference between the first surface 2221 of the first rear cover 2220 and the second surface 2321 of the second rear cover 2320 is within an allowable error range. That the third surface 2222 of the first rear cover 2220 and the fourth surface 2322 of the second rear cover 2320 are flush means that the third surface 2222 of the first rear cover 2220 and the fourth surface 2322 of the second rear cover 2320 are coplanar, or a height difference between the third surface 2222 of the first rear cover 2220 and the fourth surface 2322 of the second rear cover 2320 is within the allowable error range.

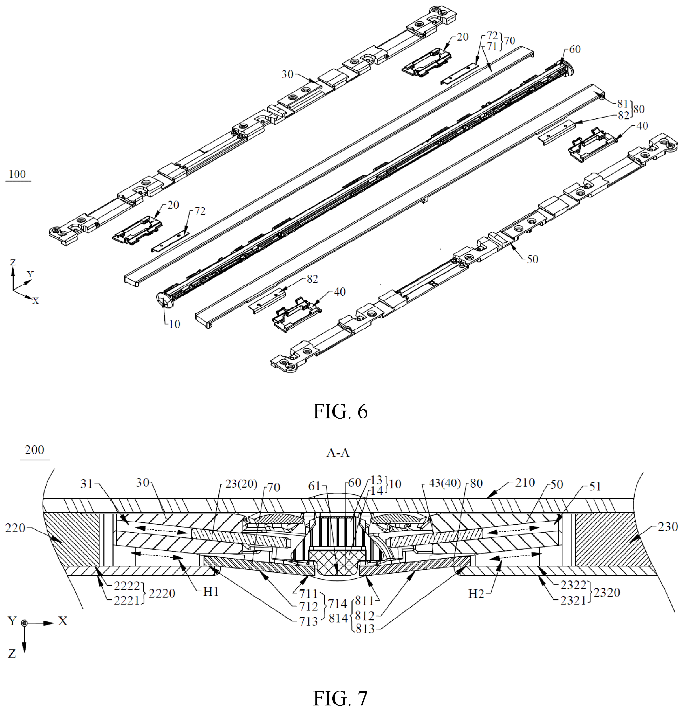

Referring to FIG. 5 and FIG. 6, FIG. 5 is a diagram of a structure of the rotation mechanism 100 of the electronic device 200 shown in FIG. 1, and FIG. 6 is a schematic exploded view of the rotation mechanism 100 shown in FIG. 5.

The rotation mechanism 100 may include a middle beam 10, a first rotation portion W1, a second rotation portion W2, and a door panel assembly W3. The first rotation portion W1 and the second rotation portion W2 are respectively located on two sides of the middle beam 10 in a width direction (namely, the X direction). The first rotation portion W1 is rotatably connected to the middle beam 10, and an end of the first rotation portion W1 away from the middle beam 10 extends into the first housing 220 and is fixedly connected to the first housing 220. The second rotation portion W2 is rotatably connected to the middle beam 10, and an end of the second rotation portion W2 away from the middle beam 10 extends into the second housing 230 and is fixedly connected to the second housing 230. The door panel assembly W3 includes a middle door panel 60, a first door panel 70, and a second door panel 80. The middle door panel 60 is connected to the middle beam 10, and the first door panel 70 and the second door panel 80 are respectively located on two sides of the middle door panel 60 in a width direction (namely, the X direction). The first door panel 70 is fixedly connected to the first rotation portion W1, and is slidably connected to the first housing 220. A part of the first door panel 70 is located on an outer part of the first housing 220 and covers a part of the first rotation portion W1, and a part of the first door panel 70 is located on an inner part of the first housing 220. The second door panel 80 is fixedly connected to the second rotation portion W2, and is slidably connected to the second housing 230. A part of the second door panel 80 is located on an outer part of the second housing 230 and covers a part of the second rotation portion W2, and a part of the second door panel 80 is located on an inner part of the second housing 230. The flexible display screen 210 is located on a side of the middle beam 10 facing away from the middle door panel 60.

The middle beam 10 can maintain a static state during relative folding and relative unfolding of the first housing 220 and the second housing 230. In other words, during the relative folding and the relative unfolding of the first housing 220 and the second housing 230, the middle beam 10 can maintain a position thereof without changing, that is, the middle beam 10 is relatively static, while both the first housing 220 and the second housing 230 may rotate relative to the middle beam 10. When rotating relative to the middle beam 10, the first housing 220 can drive the first rotation portion W1 to rotate relative to the middle beam 10, thereby driving the first door panel 70 to rotate relative to the middle beam 10. When rotating relative to the middle beam 10, the second housing 230 can drive the second rotation portion W2 to rotate relative to the middle beam 10, thereby driving the second door panel 80 to rotate relative to the middle beam 10.

Referring to FIG. 7, FIG. 7 is a schematic partial cross-sectional view taken along a section line A-A in FIG. 4. In FIG. 7, for ease of illustration, a dotted line serves as a boundary, the middle beam 10 is above the dotted line, and the middle door panel 60 is below the dotted line.

When the electronic device 200 is in the unfolded state, the first housing 220 and the second housing 230 are unfolded relative to each other, and at least a part of the middle door panel 60 of the rotation mechanism 100 is located in the gap region between the first rear cover 2220 of the first housing 220 and the second rear cover 2320 of the second housing 230, so that the at least a part of the middle door panel 60 of the rotation mechanism 100 and the first rear cover 2220 of the first housing 220 and/or the second rear cover 2320 of the second housing 230 are arranged on a same layer.

It may be understood that in the related art, a middle beam in a rotating shaft is a primary bearing component of the rotating shaft, each swing arm in the rotating shaft forms a kinematic pair connection with the middle beam, and even a synchronization mechanism and a damping mechanism may be arranged in the middle beam. Therefore, strength and rigidity of the middle beam directly affect reliability of an entire shaft, even reliability of an entire device and user experience of a consumer. The rotating shaft generally includes the middle beam and a middle decorating door panel fixed to the middle beam. Therefore, a dimension T₁ of the middle beam in a thickness direction is equal to a thickness T₀ of the entire device in a flattened state minus a thickness T₂ of a screen module minus a thickness T₃ of a battery cover minus a thickness T₄ of the middle decorating door panel. Limited by materials and manufacturing processes, the thickness of the battery cover and the thickness of the middle decorating door panel are difficult to further reduce. Therefore, with a trend of foldable devices becoming thinner and lighter, the dimension of the middle beam in the thickness direction becomes smaller and smaller. Consequently, the strength and rigidity of the middle beam become worse and worse, making it difficult to meet a reliability requirement of the rotating shaft and even the entire device.

Based on this, in this embodiment of this application, when the entire device is in the unfolded state, the at least a part of the middle door panel 60 and the rear covers of the left and right housings are arranged on the same layer. In this way, the middle door panel 60 can be arranged at a position with a smaller distance difference or no distance difference from the rear covers of the left and right housings in a thickness direction of the entire device, so that the position of the middle door panel 60 can be closer to the rear covers of the left and right housings. When the entire device is in a flattened state, the position of the middle door panel 60 is closer to the rear covers of the left and right housings, so that the position of the middle door panel 60 can be raised to a same height as the rear covers of the left and right housings or to a smaller height difference from the rear covers of the left and right housings. In this way, in a thickness composition of the entire device, that a dimension T₁ of the middle beam 10 in a thickness direction is equal to a thickness T₀ of the entire device in the flattened state minus a thickness T₂ of a screen module minus a thickness T₃ of a battery cover (that is, a thickness of the first rear cover 2220 and/or a thickness of the second rear cover 2320) minus a thickness T₄ of a middle decorating door panel (that is, a thickness of the middle door panel 60) is adjusted to that the dimension T₁ of the middle beam 10 in the thickness direction is equal to the thickness T₀ of the entire device in the flattened state minus the thickness T₂ of the screen module minus the thickness T₄ of the middle decorating door panel (that is, the thickness of the middle door panel 60).

Based on the foregoing dimension formula, when the thickness T₀ of the entire device in the flattened state, the thickness T₂ of the screen module, and the thickness T₄ of the middle decorating door panel are not changed or are changed slightly, the dimension T₁ of the middle beam 10 in the thickness direction can be increased by one thickness T₃ of the battery cover. In this way, more arrangement spaces can be freed up for the middle beam 10 in the thickness direction of the entire device, so that a cross-sectional area of the middle beam 10 in the thickness direction of the entire device can be significantly increased. As the cross-sectional area of the middle beam 10 in the thickness direction of the entire device increases, not only can the strength and rigidity of the middle beam 10 be enhanced to an extent, but also various structures connected to the middle beam 10 to form kinematic pair connections can be strengthened to varying degrees, thereby enhancing the entire rotation mechanism 100 in all aspects and meeting the reliability requirement of the entire shaft. For example, by adopting the foregoing design solution, under a same design constraint, the cross-sectional area of the middle beam 10 in the thickness direction can be increased by approximately 34%.

In addition, based on the foregoing dimension formula, when the dimension T₁ of the middle beam 10 in the thickness direction, the thickness T₂ of the screen module, and the thickness T₄ of the middle decorating door panel are not changed or are changed slightly, the thickness T₀ of the entire device in the flattened state may be supported to be reduced by at least one thickness T₃ of the battery cover, and a thickness of the entire device in the folded state is supported to be reduced by at least two thicknesses T₃ of the battery covers. In other words, under a condition of maintaining a conventional design in which the strength and rigidity of the middle beam are not changed, the solution of the embodiments of this application can support thickness reduction of the entire device in the flattened state and the folded state, to achieve thinning of the electronic device 200. For example, the thickness of the battery cover is A mm, and this solution may support reducing the thickness of the entire device in the flattened state by A mm, or reducing the thickness of the entire device in the folded state by 2A mm.

Still referring to FIG. 7, a surface of the middle door panel 60 facing away from the middle beam 10 is a middle exterior surface 61 of the middle door panel 60.

When the electronic device 200 is in the unfolded state, that the at least a part of the middle door panel 60 of the rotation mechanism 100 and the first rear cover 2220 of the first housing 220 and/or the second rear cover 2320 of the second housing 230 are arranged on a same layer may mean that when the first housing 220 and the second housing 230 are unfolded relative to each other, the middle exterior surface 61 of the middle door panel 60 may be arranged to protrude in the Z direction relative to the third surface 2222 of the first rear cover 2220 and/or the fourth surface 2322 of the second rear cover 2320, and may be arranged to be recessed in the direction opposite to the Z direction relative to the first surface 2221 of the first rear cover 2220 and/or the second surface 2321 of the second rear cover 2320. In other words, the middle exterior surface 61 of the middle door panel 60 may be higher than the third surface 2222 of the first rear cover 2220 and/or the fourth surface 2322 of the second rear cover 2320 and lower than the first surface 2221 of the first rear cover 2220 and/or the second surface 2321 of the second rear cover 2320.

Alternatively, that the at least a part of the middle door panel 60 of the rotation mechanism 100 and the first rear cover 2220 of the first housing 220 and/or the second rear cover 2320 of the second housing 230 are arranged on a same layer means that when the first housing 220 and the second housing 230 are unfolded relative to each other, the middle exterior surface 61 of the middle door panel 60 may be arranged to protrude in the Z direction relative to the third surface 2222 of the first rear cover 2220 and/or the fourth surface 2322 of the second rear cover 2320, and may be arranged to be flush with the first surface 2221 of the first rear cover 2220 and/or the second surface 2321 of the second rear cover 2320. In other words, the middle exterior surface 61 of the middle door panel 60 may be higher than the third surface 2222 of the first rear cover 2220 and/or the fourth surface 2322 of the second rear cover 2320 and flush with the first surface 2221 of the first rear cover 2220 and/or the second surface 2321 of the second rear cover 2320. That the middle exterior surface 61 of the middle door panel 60 is flush with the first surface 2221 of the first rear cover 2220 and/or the second surface 2321 of the second rear cover 2320 means that the middle exterior surface 61 of the middle door panel 60 and the first surface 2221 of the first rear cover 2220 and/or the second surface 2321 of the second rear cover 2320 are coplanar, or a height difference between the middle exterior surface 61 of the middle door panel 60 and the first surface 2221 of the first rear cover 2220 and/or the second surface 2321 of the second rear cover 2320 is within the allowable error range.

An example in which the middle exterior surface 61 of the middle door panel 60 is flush with the first surface 2221 of the first rear cover 2220 and/or the second surface 2321 of the second rear cover 2320 is used below for description. Certainly, in another embodiment, the middle exterior surface 61 of the middle door panel 60 may be lower than or higher than the first surface 2221 of the first rear cover 2220 and the second surface 2321 of the second rear cover 2320. This is not strictly limited.

It may be understood that when the electronic device 200 is in the unfolded state, the middle exterior surface 61 of the middle door panel 60 is arranged to be flush with the first surface 2221 of the first rear cover 2220 and the second surface 2321 of the second rear cover 2320, so that the middle door panel 60 can be raised in a direction away from the screen, thereby changing the position of the middle door panel 60. In this way, the middle door panel 60 is changed from having a distance from the first rear cover 2220 and the second rear cover 2320 in the thickness direction of the entire device to having no distance difference or a small distance difference from the first rear cover 2220 and the second rear cover 2320 in the thickness direction of the entire device, that is, the middle door panel 60, the first rear cover 2220, and the second rear cover 2320 may be arranged approximately on a same layer. Based on a connection relationship between the middle door panel 60 and the middle beam 10, an end of the middle beam 10 in contact with the middle door panel 60 may follow the middle door panel 60 to also be raised in the direction away from the screen. Therefore, when the thickness of the entire device in the flattened state is not changed, an increment of the dimension of the middle beam in the thickness direction is maximized, that is, a reinforcement amplitude is maximized. This further increases the cross-sectional area of the middle beam 10 in the thickness direction, which is conducive to further improving the strength and rigidity of the middle beam 10 and improving the reliability of the entire device, and may also improve refinement of an appearance of the electronic device 200 and user experience of the user.

Still referring to FIG. 7, a surface of the middle beam 10 facing the middle door panel 60 may be flush with the third surface 2222 of the first rear cover 2220 and/or the fourth surface 2322 of the second rear cover 2320. That the surface of the middle beam 10 facing the middle door panel 60 is flush with the third surface 2222 of the first rear cover 2220 and/or the fourth surface 2322 of the second rear cover 2320 means that the surface of the middle beam 10 facing the middle door panel 60 and the third surface 2222 of the first rear cover 2220 and/or the fourth surface 2322 of the second rear cover 2320 are coplanar, or a height difference between the surface of the middle beam 10 facing the middle door panel 60 and the third surface 2222 of the first rear cover 2220 and/or the fourth surface 2322 of the second rear cover 2320 is within the allowable error range.

It may be understood that the surface of the middle beam 10 facing the middle door panel 60 is flush with the third surface 2222 of the first rear cover 2220 and/or the fourth surface 2322 of the second rear cover 2320, so that the middle door panel 60 connected to the middle beam 10 can be fully arranged on a same layer as the first rear cover 2220 and/or the second rear cover 2320, and the middle beam 10 can extend from a screen side of the electronic device 200 to a rear cover side of the electronic device 200 in the Z direction, to further increase a cross-sectional dimension of the middle beam 10 in the Z direction. Because the thickness of the middle beam 10 (the dimension of the middle beam 10 in the Z direction) is increased, the strength, the rigidity, and the like of the middle beam 10 are enhanced to an extent, thereby effectively improving reliability of the middle beam 10.

Certainly, in another embodiment, the surface of the middle beam 10 facing the middle door panel 60 may be alternatively arranged to protrude in the Z direction relative to the third surface 2222 of the first rear cover 2220 and/or the fourth surface 2322 of the second rear cover 2320, and may be arranged to be recessed in the direction opposite to the Z direction relative to the first surface 2221 of the first rear cover 2220 and/or the second surface 2321 of the second rear cover 2320. Alternatively, the surface of the middle beam 10 facing the middle door panel 60 may be arranged to be recessed in the direction opposite to the Z direction relative to the third surface 2222 of the first rear cover 2220 and/or the fourth surface 2322 of the second rear cover 2320. This is not strictly limited.

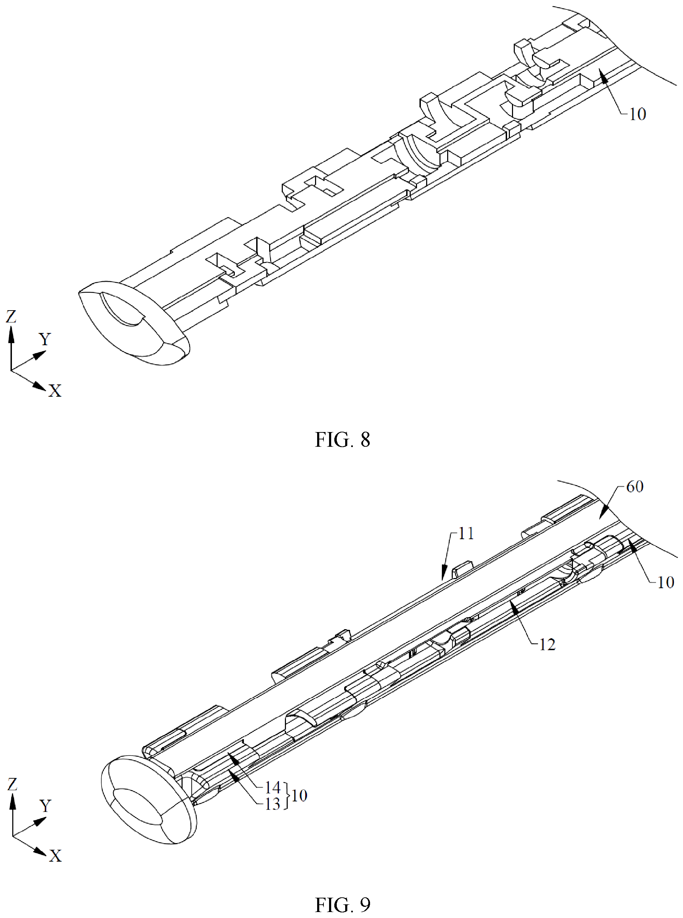

Referring to FIG. 8 and FIG. 9, FIG. 8 is a diagram of a partial structure of the middle beam 10 of the rotation mechanism 100 shown in FIG. 5, and FIG. 9 is a diagram of another partial structure of the middle beam 10 of the rotation mechanism 100 shown in FIG. 5 from an angle.

In this embodiment of this application, the middle beam 10 may extend in the Y direction and extend from an end of the rotation mechanism 100 to another end of the rotation mechanism 100 in the Y direction. The middle beam 10 is a primary bearing component in the rotation mechanism 100. The middle beam may form kinematic pair connections with swing arms in the first rotation portion W1 and the second rotation portion W2, and may also provide a specific bearing space, for arranging a synchronization mechanism implementing synchronization motion of the first housing 220 and the second housing 230 and a damping mechanism implementing good damping feel of the electronic device 200 in the bearing space.

In a possible implementation, as shown in FIG. 8, the middle beam 10 may be an integrated structure. For example, the middle beam 10 may form the integrated structure in an integral forming manner. The middle beam 10 may be fixedly connected to the middle door panel 60 in a manner such as bonding or welding.

It may be understood that the middle beam 10 formed in the integrated structure has fewer parts, which is conducive to simplifying a manufacturing process of the middle beam 10 and improving production and assembly efficiency of the middle beam 10.

In another possible implementation, as shown in FIG. 9, the middle beam 10 may alternatively be a split structure. It may be understood that when the middle beam 10 is a split structure, the middle beam 10 may be split into a plurality of structures in the Z direction, and a same structural member may also be split into a plurality of structures in the Y direction, to simplify the middle beam 10 in a layered split manner. This avoids a problem of reduced strength due to an excessive extension length of the same structural member, and facilitates positioning and assembly.

An example in which the middle beam 10 is a split structure is used below for description. However, it should be understood that this application is not limited thereto. In addition, all related descriptions of the middle beam 10 in a split structure below may be applied to the middle beam 10 in an integrated structure when there is no conflict.

Referring to FIG. 9, the middle beam 10 may have a first rotation groove 11 and a second rotation groove 12. The first rotation groove 11 of the middle beam 10 can provide a motion space for a rotation action of a first swing arm 20 of the first rotation portion W1 relative to the middle beam 10. The second rotation groove 12 of the middle beam 10 can provide a motion space for a rotation action of a second swing arm 40 of the second rotation portion W2 relative to the middle beam 10.

The first rotation groove 11 of the middle beam 10 and the second rotation groove 12 of the middle beam 10 are provided opposite to each other in the X direction and are provided in a staggered manner in the Y direction. That the first rotation groove 11 of the middle beam 10 and the second rotation groove 12 of the middle beam 10 are provided in a staggered manner in the Y direction means that the first rotation groove 11 of the middle beam 10 and the second rotation groove 12 of the middle beam 10 may be provided at an interval in a fully staggered manner in the Y direction, or may be provided to be partially staggered and partially overlapped in the Y direction. When the first rotation groove 11 and the second rotation groove 12 are provided to be partially staggered in the Y direction, structures of the first rotation groove 11 and the second rotation groove 12 can be made independent of each other and do not interfere with each other, and a dimension of the middle beam 10 in the X direction can be further reduced to the maximum extent, facilitating miniaturization and thinning of the electronic device 200.

An opening of the first rotation groove 11 of the middle beam 10 is located on a side of the middle beam 10 in the X direction, to be provided for the first swing arm 20 of the first rotation portion W1 to extend into the groove. An opening of the second rotation groove 12 of the middle beam 10 is located on another side of the middle beam 10 in the X direction, to be provided for the second swing arm 40 of the second rotation portion W2 to extend into the groove. An extension direction of the first rotation groove 11 of the middle beam 10 is opposite to an extension direction of the second rotation groove 12 of the middle beam 10.

For example, a quantity of first rotation grooves 11 may be two, the two first rotation grooves 11 are provided on a same side of the middle beam 10, and the two first rotation grooves 11 have a same opening direction and are provided at an interval at two ends of the middle beam 10 in the Y direction. Each first rotation groove 11 is configured to mount one first swing arm 20 in the first rotation portion W 1. A quantity of second rotation grooves 12 may be two, the two second rotation grooves 12 are provided on a same side of the middle beam 10, and the two first rotation grooves 11 have a same opening direction and are provided at an interval at two ends of the middle beam 10 in the Y direction. Each second rotation groove 12 is configured to mount one second swing arm 40 in the second rotation portion W2. The opening direction of the second rotation groove 12 is opposite to the opening direction of the first rotation groove 11. Both the first rotation groove 11 and the second rotation groove 12 may be arc-shaped grooves.

It should be noted that one first rotation groove 11 and one second rotation groove 12 may form a set of rotation groove structure. According to an actual application requirement of the rotation mechanism 100, one or more sets of rotation groove structures may be arranged on the middle beam 10, and arrangement positions of the one or more sets of rotation groove structures may be selected according to the actual application requirement. This is not strictly limited.

In addition, the first rotation groove 11 of the middle beam 10 and the second rotation groove 12 of the middle beam 10 may be an integrated structure located on the middle beam 10, or may be an assembled structure formed by splicing a plurality of components in the middle beam 10. An example in which the first rotation groove 11 of the middle beam 10 and the second rotation groove 12 of the middle beam 10 are an assembled structure formed by splicing a plurality of components in the middle beam 10 is used below for description. However, it should be understood that this application is not limited thereto.

Referring to FIG. 9, the middle beam 10 may include a middle beam base 13 and a middle beam cover plate 14. The middle beam base 13 may be configured to provide a mounting basis for the first rotation portion W1 and the second rotation portion W2. The middle beam cover plate 14 may conceal some structural members that are arranged in the middle beam 10, to achieve a good appearance effect of the electronic device 200. The middle beam cover plate 14 can be spliced with the middle beam base 13 to form the first rotation groove 11 of the middle beam 10 and the second rotation groove 12 of the middle beam 10.

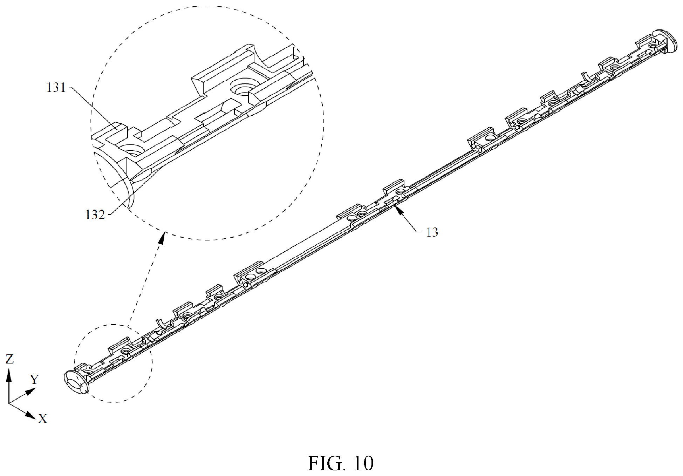

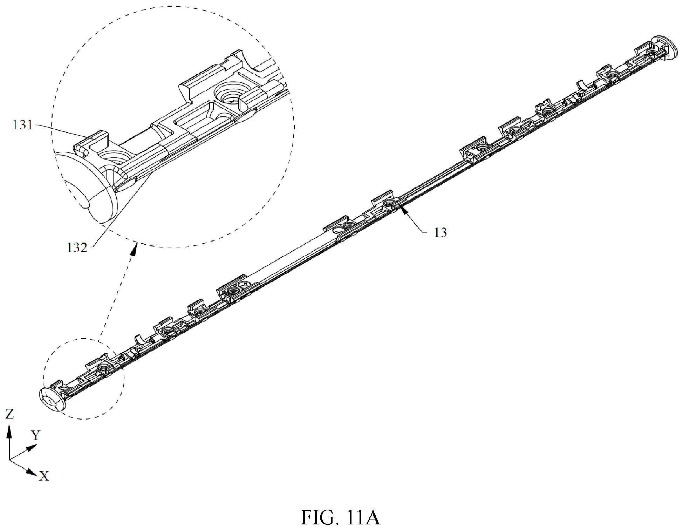

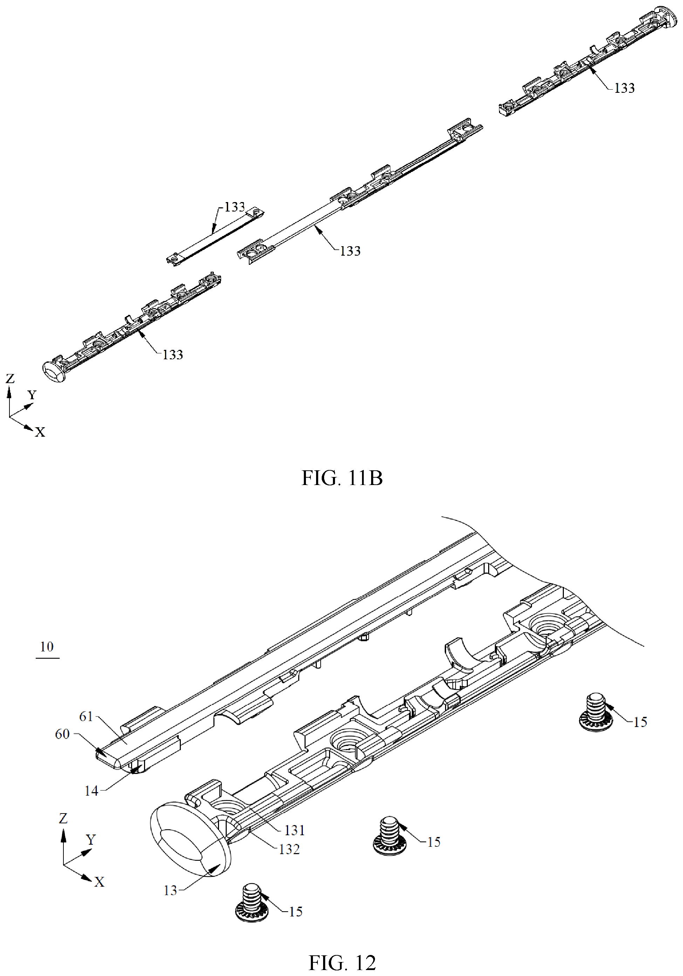

Referring to FIG. 10, FIG. 11A, and FIG. 11B, FIG. 10 is a diagram of a structure of a middle beam base 13 of the middle beam 10 of the rotation mechanism 100 shown in FIG. 5, FIG. 11A is a diagram of another structure of a middle beam base 13 of the middle beam 10 of the rotation mechanism 100 shown in FIG. 5, and FIG. 11B is a schematic exploded view of the middle beam base 13 shown in FIG. 11A.

The middle beam base 13 may extend in the Y direction and extend from an end of the rotation mechanism 100 to another end of the rotation mechanism 100 in the Y direction. The middle beam base 13 may include a top portion 131 and a bottom portion 132. The bottom portion 132 of the middle beam base 13 and the top portion 131 of the middle beam base 13 are arranged opposite to each other in the Z direction. The top portion 131 of the middle beam base 13 faces the middle door panel 60. The bottom portion 132 of the middle beam base 13 faces the flexible display screen 210. The middle beam base 13 may be an integrated structure, or may be an assembled structure.

As shown in FIG. 10, when the middle beam base 13 is an integrated structure, the middle beam base 13 is a single structural member, and may independently extend from an end of the rotation mechanism 100 to another end of the rotation mechanism 100. For example, the middle beam base 13 may form the integrated structure in an integral forming manner. It may be understood that the middle beam base 13 formed in the integrated structure has fewer parts, which is conducive to simplifying a manufacturing process of the middle beam base 13 and improving production and assembly efficiency of the middle beam base 13.

As shown in FIG. 11A and FIG. 11B, when the middle beam base 13 is an assembled structure, the middle beam base 13 may include a plurality of sub-bases 133. The plurality of sub-bases 133 may be arranged in the Y direction. Each sub-base 133 extends in the Y direction with an extension length less than a total extension length of the middle beam base 13. The plurality of sub-bases 133 may be connected head-to-tail, thereby being spliced to form the middle beam base 13 extending from an end of the rotation mechanism 100 to another end of the rotation mechanism 100.

It may be understood that by splitting the long middle beam base 13 into the plurality of short sub-bases 133, failure of the middle beam base 13 due to a problem such as being damaged or broken during processing, handling, assembly, and the like due to an excessive extension length can be effectively avoided, thereby ensuring high reliability. In addition, by splitting the long middle beam base 13 into the plurality of short sub-bases 133, when the middle beam base 13 is damaged, only a sub-base 133 of a damaged part needs to be replaced and there is no need to replace the entire middle beam base 13. This is conducive to avoiding material waste and effectively reducing maintenance costs of the middle beam base 13.

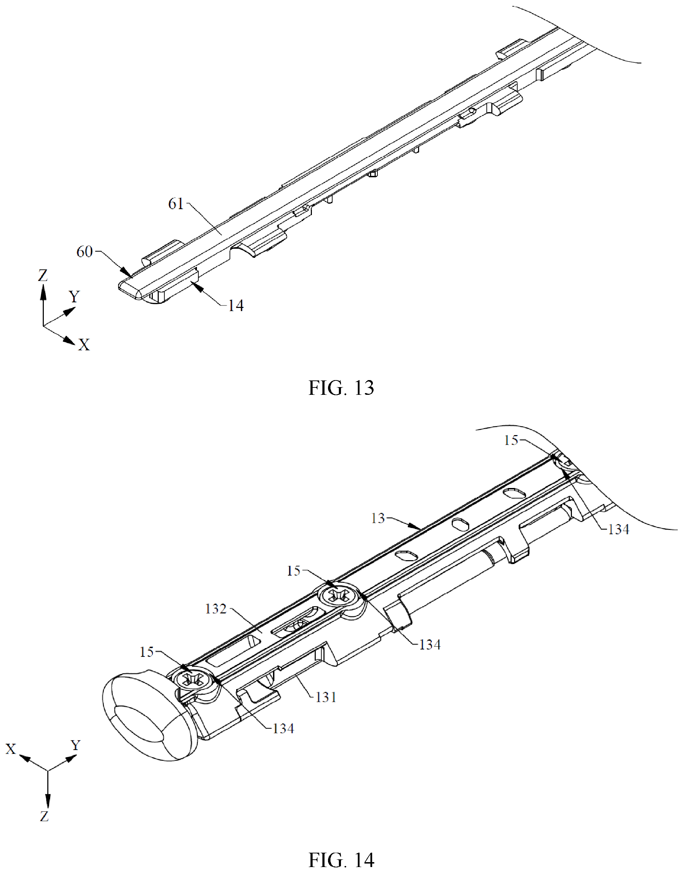

Referring to FIG. 12 and FIG. 13, FIG. 12 is a schematic exploded view of a partial structure of the middle beam 10 shown in FIG. 9, and FIG. 13 is a diagram of a structure of an integrated middle beam cover plate 14 and middle door panel 60 in the middle beam 10 shown in FIG. 9.

The middle beam cover plate 14 is connected to the top portion 131 of the middle beam base 13, and the middle beam cover plate 14 may extend in the Y direction and extend from an end of the rotation mechanism 100 to another end of the rotation mechanism 100 in the Y direction. A surface of the middle beam cover plate 14 facing away from the middle beam base 13 is connected to the middle door panel 60, and the middle beam cover plate 14 may be connected to the middle door panel 60 to form an integrated structure. The surface of the middle beam cover plate 14 facing away from the middle beam base 13 is a surface in the middle beam 10 that may be connected to the middle door panel 60. For example, the middle beam cover plate 14 and the middle door panel 60 may form the integrated structure in an integral forming manner.

It may be understood that the middle door panel 60 and the middle beam cover plate 14 are connected to form an integrated structure, so that the middle door panel 60 and the middle beam cover plate 14 may be unified into a whole. Compared with a split structure of the middle door panel 60 and the middle beam cover plate 14, in the integrated middle door panel 60 and middle beam cover plate 14, a thickness of the middle beam cover plate 14 may be increased by a thickness of one middle door panel 60, effectively increasing a cross-sectional area of the middle beam cover plate 14 in a thickness direction (that is, the Z direction), which further enhances overall strength and rigidity of the middle beam 10, and is conducive to improving the reliability of the entire shaft. For example, the middle door panel 60 and the middle beam cover plate 14 are integrated, so that the cross-sectional area of the middle beam 10 in the Z direction can be increased by about 50%.

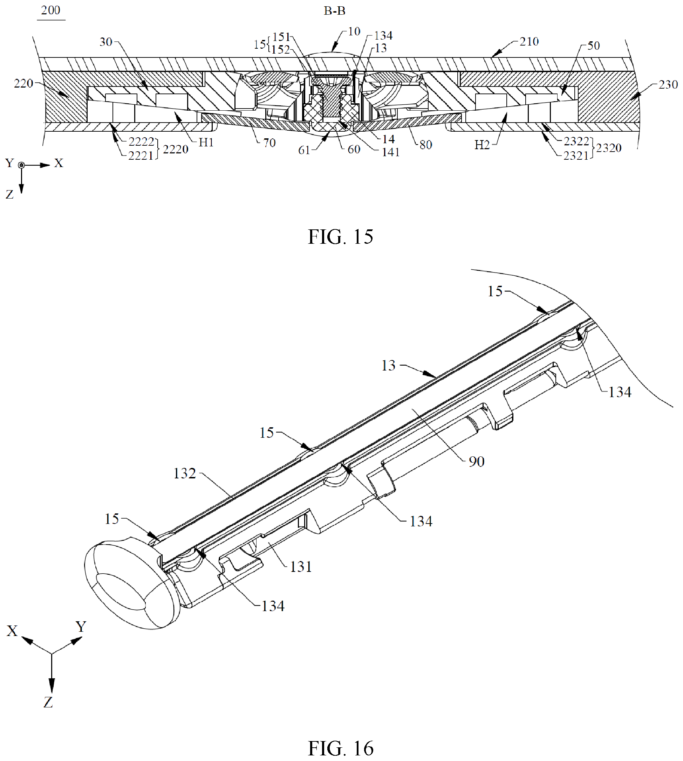

Referring to FIG. 12, FIG. 14, and FIG. 15, FIG. 14 is a diagram of another partial structure of the middle beam 10 of the rotation mechanism 100 shown in FIG. 5 from another angle, and FIG. 15 is a schematic partial cross-sectional view taken along a section line B-B in FIG. 4.

The middle beam 10 may further include a locking member 15. The locking member 15 penetrates the middle beam base 13 and the middle beam cover plate 14, and is fixedly connected to the middle beam base 13 and the middle beam cover plate 14. A part of the locking member 15 is exposed on a surface of the middle beam base 13 facing away from the middle beam cover plate 14. For example, the locking member 15 may be a screw. A quantity of locking members 15 may be one or more. When the quantity of locking members 15 is more than one, the plurality of locking members 15 are arranged in the Y direction. A structure of one locking member 15 and a connection relationship between the locking member 15 and the middle beam base 13 and the middle beam cover plate 14 are used as an example below for specific description. When there is no conflict, introduction to the structure of one locking member 15 and the connection relationship between the locking member 15 and the middle beam base 13 and the middle beam cover plate 14 below may be applied to another locking member 15.

It may be understood that due to the integration design of the middle door panel 60 and the middle beam cover plate 14, to avoid damage to an appearance of the middle door panel 60 when locking the middle beam cover plate 14 and the middle beam base 13, a locking start direction of the locking member 15 needs to avoid a side of the middle beam cover plate 14 close to the middle door panel 60, and needs to be adjusted to a side of the middle beam base 13 close to the flexible display screen 210. In other words, a locking direction of the locking member 15 needs to start from the bottom portion 132 of the middle beam base 13, pass the top portion 131 of the middle beam base 13, and end at the middle beam cover plate 14.

Specifically, the middle beam base 13 may have a first mounting hole 134. The first mounting hole 134 may be a through hole and run through the middle beam base 13 in the Z direction. The middle beam cover plate 14 may have a second mounting hole 141. The second mounting hole 141 may be a blind hole and extend in the Z direction. The second mounting hole 141 of the middle beam cover plate 14 and the first mounting hole 134 of the middle beam base 13 are provided opposite to each other in the direction opposite to the Z direction and are in communication with each other. The locking member 15 may include an end cap 151 and a cylinder 152. The end cap 151 is connected to an end of the cylinder 152. When the locking member 15 is connected to the middle beam base 13 and the middle beam cover plate 14, the end cap 151 of the locking member 15 is located in the first mounting hole 134 of the middle beam base 13, and the cylinder 152 of the locking member 15 is located in the first mounting hole 134 of the middle beam base 13 and the second mounting hole 141 of the middle beam cover plate 14. A part of the end cap 151 of the locking member 15 may be exposed at the first mounting hole 134 of the middle beam base 13. For example, the cylinder 152 of the locking member 15 may be threadedly connected to the first mounting hole 134 of the middle beam base 13 and the second mounting hole 141 of the middle beam cover plate 14. Certainly, in another embodiment, the cylinder 152 of the locking member 15 may be alternatively connected to the first mounting hole 134 of the middle beam base 13 and the second mounting hole 141 of the middle beam cover plate 14 in a welding manner or a bonding manner. This is not strictly limited.

In a possible implementation, referring to FIG. 16, FIG. 16 is a diagram of still another partial structure of the middle beam 10 of the rotation mechanism 100 shown in FIG. 5 from an angle. The rotation mechanism 100 may further include an in-screen support member 90, and the in-screen support member 90 may extend in the Y direction. The in-screen support member 90 is located on the bottom portion 132 of the middle beam base 13, and is connected to the surface of the middle beam base 13 facing away from the middle beam cover plate 14. The in-screen support member 90 covers the locking member 15. When the quantity of locking members 15 is more than one, the in-screen support member 90 covers the plurality of locking members 15. For a single locking member 15, the in-screen support member 90 may cover the entire single locking member 15, or may cover a part of the single locking member 15.

It may be understood that because the locking member 15 performs locking in a direction from a side of the middle beam base 13 close to the flexible display screen 210 to the middle beam cover plate 14, a part of the locking member 15 is exposed on the middle beam base 13 when the locking member 15 completes locking of the middle beam base 13 and the middle beam cover plate 14. Therefore, arranging the in-screen support member 90 and making the in-screen support member 90 cover the locking member 15 can avoid exposure of the locking member 15 and provide a good concealing effect and a good appearance effect. In addition, by arranging the in-screen support member 90 and making the in-screen support member 90 cover the locking member 15, the in-screen support member 90 can always be located between the flexible display screen 210 and the locking member 15 during unfolding and folding of the electronic device 200, to provide protection by separating the flexible display screen 210 and the locking member 15 and preventing the locking member 15 from squeezing the flexible display screen 210.

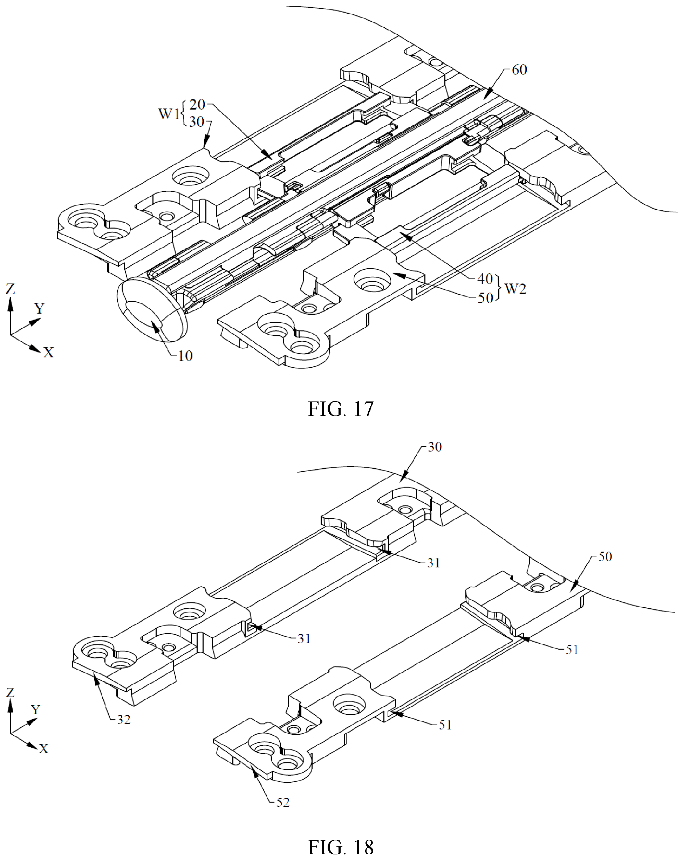

Referring to FIG. 17, FIG. 17 is a diagram of a partial assembly structure of the middle beam 10, the first rotation portion W1, and the second rotation portion W2 of the rotation mechanism 100 shown in FIG. 5.

The first rotation portion W1 may include the first swing arm 20 and a first fixing bracket 30. The first fixing bracket 30 is located on a side of the middle beam 10 in the X direction, and is fixedly connected to the first housing 220. The first swing arm 20 is connected between the middle beam 10 and the first fixing bracket 30. The second rotation portion W2 may include the second swing arm 40 and a second fixing bracket 50. The second fixing bracket 50 is located on another side of the middle beam 10 in the X direction, and is fixedly connected to the second housing 230. The second swing arm 40 is connected between the middle beam 10 and the second fixing bracket 50.

When the first housing 220 and the second housing 230 rotate relative to each other, the first housing 220 may drive the first fixing bracket 30 to rotate relative to the middle beam 10 and drive the first swing arm 20 to synchronously rotate relative to the middle beam 10, and the second housing 230 may drive the second fixing bracket 50 to rotate relative to the middle beam 10 and drive the second swing arm 40 to synchronously rotate relative to the middle beam 10, thereby implementing rotation of the rotation mechanism 100, to unfold and fold the rotation mechanism 100.

It should be noted that, for ease of illustration, only one first swing arm 20 and one second swing arm 40 are illustrated in FIG. 17. However, the entire rotation mechanism 100 may include a plurality of first swing arms 20 and a plurality of second swing arms 40. When the rotation mechanism 100 includes a plurality of first swing arms 20 and a plurality of second swing arms 40, the plurality of first swing arms 20 and the plurality of second swing arms 40 may be arranged at intervals in the Y direction. One first swing arm 20 and one second swing arm 40 are used as an example below for description of a connection relationship of the rotation mechanism 100. However, it should be understood that this application is not limited thereto.

Referring to FIG. 17 and FIG. 18, FIG. 18 is a diagram of a structure of the first fixing bracket 30 and the second fixing bracket 50 of the rotation mechanism 100 shown in FIG. 5.

The first fixing bracket 30 and the second fixing bracket 50 are respectively located on two sides of the middle beam 10 in the X direction, and both the first fixing bracket 30 and the second fixing bracket 50 can rotate relative to the middle beam 10, to achieve a folded state and an unfolded state of the rotation mechanism 100. Specifically, the first fixing bracket 30 and the second fixing bracket 50 have opposite rotation directions. When the electronic device 200 is in the unfolded state, the rotation mechanism 100 is also in the unfolded state, and the first fixing bracket 30 and the second fixing bracket 50 can be flattened relative to each other and jointly support the flexible display screen 210, making the flexible display screen 210 flatter and less prone to damage from an external touch, which is conducive to improving reliability of the flexible display screen 210. When the electronic device 200 is in the folded state, the rotation mechanism 100 is also in the folded state, and the first fixing bracket 30 and the second fixing bracket 50 can be closed to be parallel to each other, thereby providing better support performance for the flexible display screen 210.

The first fixing bracket 30 may extend in the Y direction and is connected to the first housing 220, to link with the first housing 220. In other words, when the first housing 220 performs rotational movement, the first fixing bracket 30 is driven to synchronously perform rotational movement. Therefore, the entire electronic device 200 can have better mechanical tensile and compressive strength.

The first fixing bracket 30 is provided with a first sliding groove 31, and the first sliding groove 31 can be provided for the first swing arm 20 to slide therein. As shown in FIG. 7, an extension direction of the first sliding groove 31 is arranged inclined to the first surface 2221 of the first rear cover 2220 (that is, the X direction). An included angle between the first sliding groove 31 and the first surface 2221 of the first rear cover 2220 may be greater than 0° and less than 90°. A minimum distance between the first sliding groove 31 and the third surface 2222 of the first rear cover 2220 in the Z direction gradually increases in a direction from the middle beam 10 to the first housing 220.

It should be understood that a shape of the first sliding groove 31 matches a shape of the first swing arm 20 sliding in the first sliding groove, so that a sliding action of the first swing arm 20 in the first sliding groove 31 can be smoother and more fluent.

For example, a quantity of first sliding grooves 31 may be two, the two first sliding grooves 31 are arranged at an interval on the first fixing bracket 30 in the Y direction, and each first sliding groove 31 may be provided for one first swing arm 20 to slide therein. It should be noted that the quantity of first sliding grooves 31 may be set to one or more according to an actual application requirement as long as satisfying that one first sliding groove 31 corresponds to one first swing arm 20. This is not strictly limited.

The first fixing bracket 30 is further provided with a first sliding body 32. The first sliding body 32 is arranged at an end portion of the first fixing bracket 30 in the Y direction, and the first sliding body 32 can be mounted to the first door panel 70, to implement a sliding connection between the first fixing bracket 30 and the first door panel 70.

Referring to FIG. 17 and FIG. 18, the second fixing bracket 50 may be mirror-symmetric to the first fixing bracket 30. The second fixing bracket 50 may extend in the Y direction and is connected to the second housing 230, to link with the second housing 230. In other words, when the second housing 230 performs rotational movement, the second fixing bracket 50 is driven to synchronously perform rotational movement. Therefore, the entire electronic device 200 can have better mechanical tensile and compressive strength.

The second fixing bracket 50 is provided with a second sliding groove 51, and the second sliding groove 51 can be provided for the second swing arm 40 to slide therein. As shown in FIG. 7, an extension direction of the second sliding groove 51 is arranged inclined to the second surface 2321 of the second rear cover 2320 (that is, the X direction). An included angle between the second sliding groove 51 and the second surface 2321 of the second rear cover 2320 may be greater than 0° and less than 90°. A minimum distance between the second sliding groove 51 and the fourth surface 2322 of the second rear cover 2320 in the Z direction gradually increases in a direction from the middle beam 10 to the second housing 230.

It should be understood that a shape of the second sliding groove 51 matches a shape of the second swing arm 40 sliding in the second sliding groove, so that a sliding action of the second swing arm 40 in the second sliding groove 51 can be smoother and more fluent.

For example, a quantity of second sliding grooves 51 may be two, the two second sliding grooves 51 are arranged at an interval on the second fixing bracket 50 in the Y direction, and each second sliding groove 51 may be provided for one second swing arm 40 to slide therein. It should be noted that the quantity of second sliding grooves 51 may be set to one or more according to an actual application requirement as long as satisfying that one second sliding groove 51 corresponds to one second swing arm 40. This is not strictly limited.

The second fixing bracket 50 is further provided with a second sliding body 52. The second sliding body 52 is arranged at an end portion of the second fixing bracket 50 in the Y direction, and the second sliding body 52 can be mounted to the second door panel 80, to implement a sliding connection between the second fixing bracket 50 and the second door panel 80.

Based on the foregoing descriptions, when the first housing 220 and the second housing 230 rotate relative to the middle beam 10 and get close to each other, the first fixing bracket 30 and the second fixing bracket 50 also rotate relative to the middle beam 10 and get close to each other, thereby folding the electronic device 200. When the first housing 220 and the second housing 230 rotate relative to the middle beam 10 and get away from each other, the first fixing bracket 30 and the second fixing bracket 50 also rotate relative to the middle beam 10 and get away from each other, thereby unfolding the electronic device 200.

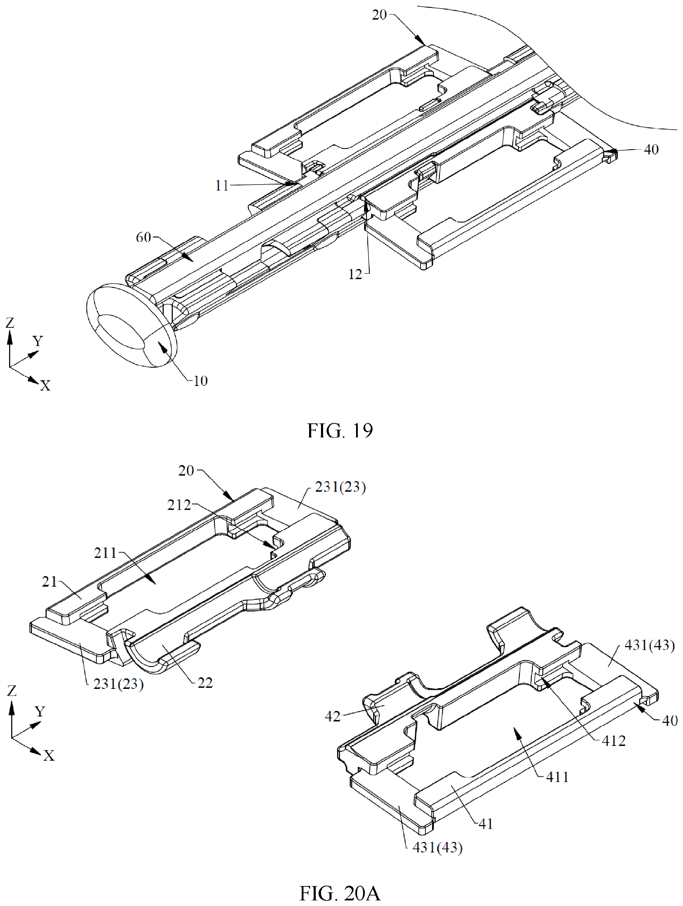

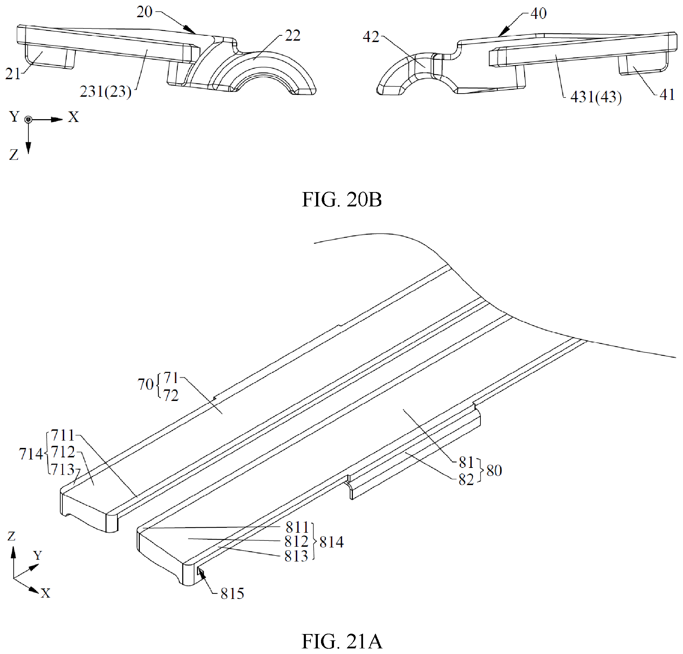

Referring to FIG. 19, FIG. 20A, and FIG. 20B, FIG. 19 is a diagram of a partial assembly structure of the middle beam 10, the first swing arm 20, and the second swing arm 40 of the rotation mechanism 100 shown in FIG. 5, FIG. 20A is a diagram of a structure of the first swing arm 20 and the second swing arm 40 of the rotation mechanism 100 shown in FIG. 5 from an angle, and FIG. 20B is a diagram of a structure of the first swing arm 20 and the second swing arm 40 of the rotation mechanism 100 shown in FIG. 5 from another angle.

The first swing arm 20 and the second swing arm 40 are respectively located on two sides of the middle beam 10 in the X direction, and the first swing arm 20 and the second swing arm 40 have opposite rotation directions. The first swing arm 20 and the second swing arm 40 can control a swing posture of the rotation mechanism 100, thereby supporting the flexible display screen 210 and enhancing strength of the entire rotation mechanism 100.

An end of the first swing arm 20 is rotatably connected to the middle beam 10, and another end of the first swing arm 20 is slidably connected to the first fixing bracket 30. When the first housing 220 rotates relative to the middle beam 10, the first housing 220 drives the first fixing bracket 30 to rotate relative to the middle beam 10, and the first swing arm 20 can be driven, by the rotation of the first fixing bracket 30 relative to the middle beam 10, to rotate relative to the middle beam 10 and slide relative to the first fixing bracket 30. Specifically, the first swing arm 20 may include a first swing arm body 21, a first rotating body 22, and a first sliding portion 23.

The first swing arm body 21 is provided with a first through hole 211 and a first groove 212, the first through hole 211 runs through the first swing arm body 21 in the Z direction, and the first through hole 211 is used for accommodating a damping mechanism (not shown in the figure) in the rotation mechanism 100. For example, the first through hole 211 may be used for accommodating a spring and a cam assembly of the damping mechanism. The first groove 212 is in communication with the first through hole 211, and is arranged to be recessed in a direction from a center of the first swing arm body 21 to a periphery of the first swing arm body 21. The first groove 212 may be provided for a sliding portion in the cam assembly of the damping mechanism to slide therein, to form a sliding fit with the cam assembly to form a sliding pair.

The first rotating body 22 is connected to an end of the first swing arm body 21, the first rotating body 22 is mounted in the first rotation groove 11 of the middle beam 10, and the first rotating body 22 can slide in the first rotation groove 11 of the middle beam 10. It may be understood that through sliding movement of the first rotating body 22 of the first swing arm 20 in the first rotation groove 11 of the middle beam 10, rotational movement of the first swing arm 20 relative to the middle beam 10 can be implemented, that is, a rotational connection between the first swing arm 20 and the middle beam 10 can be implemented. For example, the first rotating body 22 may be in an arc shape.

The first sliding portion 23 is connected to the first swing arm body 21, the first sliding portion 23 is mounted in the first sliding groove 31 of the first fixing bracket 30, and the first sliding portion 23 can slide in the first sliding groove 31 of the first fixing bracket 30. When the electronic device 200 is in the unfolded state, an extension direction of the first sliding portion 23 is arranged inclined to an extension direction of the first surface 2221 of the first rear cover 2220 (that is, the X direction). An included angle between the first sliding portion 23 and the first surface 2221 of the first rear cover 2220 may be greater than 0° and less than 90°. A minimum distance between the first sliding portion 23 and the third surface 2222 of the first rear cover 2220 in the Z direction gradually increases in a direction from the middle beam 10 to the first housing 220.

Specifically, the first sliding portion 23 may include two first sliders 231, the two first sliders 231 are respectively located on two sides of the first swing arm body 21, and the two first sliders 231 are arranged opposite to each other in the Y direction. An end of each first slider 231 in the X direction may be beyond an end of the first swing arm body 21 in the X direction. The two first sliders 231 are respectively mounted on two sides of the first sliding groove 31 of the first fixing bracket 30 in the Y direction, and the two first sliders 231 can slide in the first sliding groove 31 of the first fixing bracket 30. When the electronic device 200 is in the unfolded state, an extension direction of the first slider 231 is arranged inclined to the extension direction of the first surface 2221 of the first rear cover 2220 (that is, the X direction). An included angle between the first slider 231 and the first surface 2221 of the first rear cover 2220 may be greater than 0° and less than 90°. A minimum distance between the first slider 231 and the third surface 2222 of the first rear cover 2220 in the Z direction gradually increases in the direction from the middle beam 10 to the first housing 220.

Still referring to FIG. 7, in FIG. 7, a double-headed arrow on a left side indicates a sliding direction of the first swing arm 20 relative to the first fixing bracket 30 and a sliding direction of the first door panel 70 relative to the first housing 220. A double-headed arrow on a right side indicates a sliding direction of the second swing arm 40 relative to the second fixing bracket 50 and a sliding direction of the second door panel 80 relative to the second housing 230.

A sliding direction of the first sliding portion 23 relative to the first fixing bracket 30 is arranged inclined to the first surface 2221 of the first rear cover 2220 (that is, the X direction in FIG. 7). An included angle between the sliding direction of the first sliding portion 23 relative to the first fixing bracket 30 and the first surface 2221 of the first rear cover 2220 is greater than 0° and less than 90°.

It may be understood that in the unfolded state of the entire device, an end of the first door panel 70 close to the middle door panel 60 is higher than the third surface 2222 of the first rear cover 2220, and an end of the first door panel 70 away from the middle door panel 60 is lower than the third surface 2222 of the first rear cover. Therefore, a main body of the first door panel 70 is arranged to be inclined in the unfolded state of the entire device. In addition, due to a fixed connection between the first door panel 70 and the first swing arm 20, opening and closing actions of the first door panel 70 need to be driven by the first swing arm 20, and the sliding direction of the first swing arm 20 relative to the first fixing bracket 30 needs to adapt to an inclined arrangement form of the first door panel 70.

Therefore, inclined sliding is arranged, to make the sliding direction of the first swing arm 20 adapt to an inclined direction of the first door panel 70, that is, the sliding direction of the first swing arm 20 relative to the first fixing bracket 30 is arranged inclined to the first surface 2221 of the first rear cover 2220. This can ensure that the opening and closing actions of the first door panel 70 can be smooth and fluent, thereby ensuring that folding of the rotation mechanism 100 can also be smooth and fluent, and avoiding interference between the structures.

It should be noted that to ensure that the flexible display screen 210 remains a same length during the unfolding and folding of the entire device, a rotation center line of the first swing arm 20 and the middle beam 10 needs to be adjusted. A specific position of the rotation center line of the first swing arm 20 and the middle beam 10 may be determined according to a same-length requirement of the flexible display screen 210, and may be as close as possible to the middle exterior surface 61 of the middle beam 10.

When the user folds the first housing 220, the first housing 220 drives the first fixing bracket 30 to rotate, and the first fixing bracket 30 drives, through the first sliding groove 31, the first swing arm 20 to slide in the first sliding groove 31, thereby implementing linkage between the first fixing bracket 30 and the first swing arm 20, to enable the first swing arm 20 to rotate relative to the middle beam 10. In other words, the first fixing bracket 30 can rotate relative to the middle beam 10 and drive the first swing arm 20 to rotate relative to the middle beam 10, to form a rotation chain of "first fixing bracket 30-first swing arm 20-middle beam 10", enabling the rotation mechanism 100 to fluently and smoothly perform rotational movement.

Referring to FIG. 19, FIG. 20A, and FIG. 20B, an end of the second swing arm 40 is rotatably connected to the middle beam 10, and another end of the second swing arm 40 is slidably connected to the second fixing bracket 50. When the second housing 230 rotates relative to the middle beam 10, the second housing 230 drives the second fixing bracket 50 to rotate relative to the middle beam 10, and the second swing arm 40 can be driven, by the rotation of the second fixing bracket 50 relative to the middle beam 10, to rotate relative to the middle beam 10 and slide relative to the second fixing bracket 50. Specifically, the second swing arm 40 may include a second swing arm body 41, a second rotating body 42, and a second sliding portion 43.

The second swing arm body 41 is provided with a second through hole 411 and a second groove 412, the second through hole 411 runs through the second swing arm body 41 in the Z direction, and the second through hole 411 is used for accommodating a damping mechanism (not shown in the figure) in the rotation mechanism 100. For example, the first through hole 211 may be used for accommodating a spring and a cam assembly of the damping mechanism. The second groove 412 is in communication with the second through hole 411, and is arranged to be recessed in a direction from a center of the second swing arm body 41 to a periphery of the second swing arm body 41. The second groove 412 may be provided for a sliding portion in the cam assembly of the damping mechanism to slide therein, to form a sliding fit with the cam assembly to form a sliding pair.

The second rotating body 42 is connected to an end of the second swing arm body 41, the second rotating body 42 is mounted in the second rotation groove 12 of the middle beam 10, and the second rotating body 42 can slide in the second rotation groove 12 of the middle beam 10. It may be understood that through sliding movement of the second rotating body 42 of the second swing arm 40 in the second rotation groove 12 of the middle beam 10, rotational movement of the second swing arm 40 relative to the middle beam 10 can be implemented, that is, a rotational connection between the second swing arm 40 and the middle beam 10 can be implemented. For example, the second rotating body 42 may be in an arc shape.

The second sliding portion 43 is connected to the second swing arm body 41, the second sliding portion 43 is mounted in the second sliding groove 51 of the second fixing bracket 50, and the second sliding portion 43 can slide in the second sliding groove 51 of the second fixing bracket 50. When the electronic device 200 is in the unfolded state, an extension direction of the second sliding portion 43 is arranged inclined to an extension direction of the second surface 2321 of the second rear cover 2320 (that is, the X direction). An included angle between the second sliding portion 43 and the second surface 2321 of the second rear cover 2320 may be greater than 0° and less than 90°. A minimum distance between the second sliding portion 43 and the fourth surface 2322 of the second rear cover 2320 in the Z direction gradually increases in a direction from the middle beam 10 to the second housing 230.

Specifically, the second sliding portion 43 may include two second sliders 431, the two second sliders 431 are respectively located on two sides of the second swing arm body 41, and the two second sliders 431 are arranged opposite to each other in the Y direction. An end of each second slider 431 in the X direction may be beyond an end of the second swing arm body 41 in the X direction. The two second sliders 431 are respectively mounted on two sides of the second sliding groove 51 of the second fixing bracket 50 in the Y direction, and the two second sliders 431 can slide in the second sliding groove 51 of the second fixing bracket 50. When the electronic device 200 is in the unfolded state, an extension direction of the second slider 431 is arranged inclined to the extension direction of the second surface 2321 of the second rear cover 2320 (that is, the X direction). An included angle between the second slider 431 and the second surface 2321 of the second rear cover 2320 may be greater than 0° and less than 90°. A minimum distance between the second slider 431 and the second surface 2321 of the second rear cover 2320 in the Z direction gradually increases in a direction from the middle beam 10 to the second housing 230.

Still referring to FIG. 7, a sliding direction of the second sliding portion 43 relative to the second fixing bracket 50 is arranged inclined to the second surface 2321 of the second rear cover 2320 (that is, the X direction). An included angle between the sliding direction of the second sliding portion 43 relative to the second fixing bracket 50 and the second surface 2321 of the second rear cover 2320 is greater than 0° and less than 90°.

It may be understood that in the unfolded state of the entire device, an end of the second door panel 80 close to the middle door panel 60 is higher than the fourth surface 2322 of the second rear cover 2320, and an end of the second door panel 80 away from the middle door panel 60 is lower than the fourth surface 2322 of the second rear cover 2320. Therefore, a main body of the second door panel 80 is arranged to be inclined in the unfolded state of the entire device. In addition, due to a fixed connection between the second door panel 80 and the second swing arm 40, opening and closing actions of the second door panel 80 need to be driven by the second swing arm 40, and the sliding direction of the second swing arm 40 relative to the second fixing bracket 50 needs to adapt to an inclined arrangement form of the second door panel 80.

Therefore, inclined sliding is arranged, to make the sliding direction of the second swing arm 40 adapt to an inclined direction of the second door panel 80, that is, the sliding direction of the second swing arm 40 relative to the second fixing bracket 50 is arranged inclined to the second surface 2321 of the second rear cover 2320. This can ensure that the opening and closing actions of the second door panel 80 can be smooth and fluent, thereby ensuring that folding of the rotation mechanism 100 can also be smooth and fluent, and avoiding interference between the structures.

It should be noted that to ensure that the flexible display screen 210 remains a same length during the unfolding and folding of the entire device, a rotation center line of the second swing arm 40 and the middle beam 10 needs to be adjusted. A specific position of the rotation center line of the second swing arm 40 and the middle beam 10 may be determined according to a same-length requirement of the flexible display screen 210, and may be as close as possible to the middle exterior surface 61 of the middle beam 10.

When the user folds the second housing 230, the second housing 230 drives the second fixing bracket 50 to rotate, and the second fixing bracket 50 drives, through the second sliding groove 51, the second swing arm 40 to slide in the second sliding groove 51, thereby implementing linkage between the second fixing bracket 50 and the second swing arm 40, to enable the second swing arm 40 to rotate relative to the middle beam 10. In other words, the second fixing bracket 50 can rotate relative to the middle beam 10 and drive the second swing arm 40 to rotate relative to the middle beam 10, to form a rotation chain of "second fixing bracket 50-second swing arm 40-middle beam 10", enabling the rotation mechanism 100 to fluently and smoothly perform rotational movement.

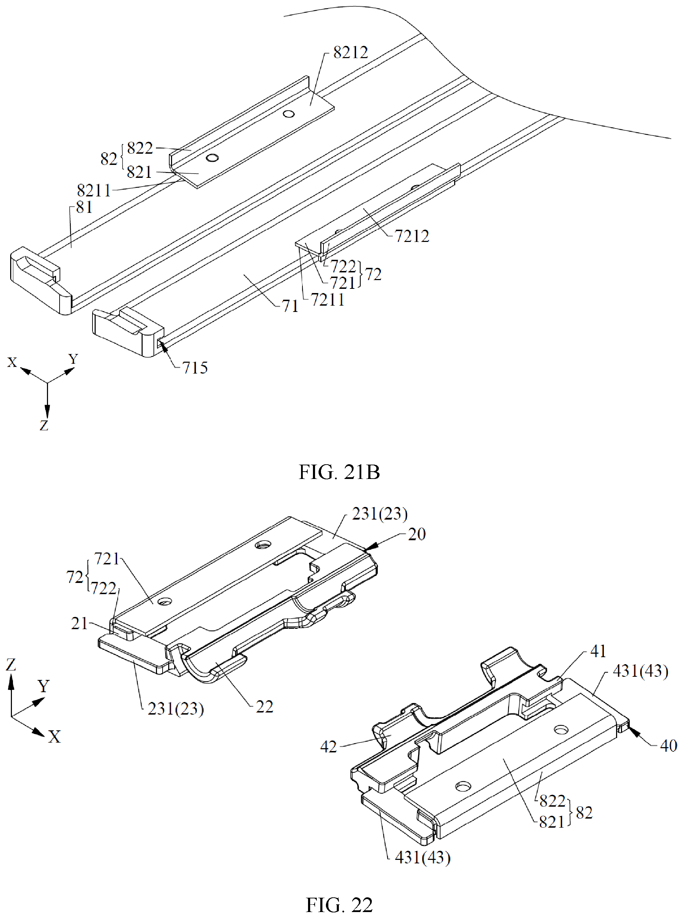

Referring to FIG. 21A and FIG. 21B, FIG. 21A is a diagram of a partial structure of the first door panel 70 and the second door panel 80 of the rotation mechanism 100 shown in FIG. 5 from an angle, and FIG. 21B is a diagram of a partial structure of the first door panel 70 and the second door panel 80 of the rotation mechanism 100 shown in FIG. 5 from another angle.

The first door panel 70 and the second door panel 80 are respectively located on the two sides of the middle door panel 60 in the X direction. The first door panel 70 and the second door panel 80 can be used as another two decorative exterior members other than the middle door panel 60 in the outward-folded electronic device 200, to cooperate with the middle door panel 60 to conceal components in the rotation mechanism 100.

The first door panel 70 is fixedly connected to the first swing arm 20, and is slidably connected to the first fixing bracket 30 and the first housing 220. It may be understood that because the first door panel 70 is fixedly connected to the first swing arm 20, and is slidably connected to the first fixing bracket 30 and the first housing 220, when the user folds the first housing 220, the first housing 220 drives the first fixing bracket 30 to rotate, causing the first fixing bracket 30 to rotate relative to the middle beam 10 and slide relative to the first door panel 70. The first swing arm 20 is driven by the first fixing bracket 30 to rotate, thereby driving the first door panel 70 to rotate, implementing rotational movement of the first door panel 70 relative to the middle door panel 60 and sliding movement of the first door panel 70 relative to the first housing 220. In other words, the first fixing bracket 30 can rotate relative to the middle beam 10 and drive the first swing arm 20 to rotate relative to the middle beam 10, and the first swing arm 20 can drive the first door panel 70 to rotate, to form a rotation chain of "first fixing bracket 30-first swing arm 20-first door panel 70-middle beam 10", enabling the rotation mechanism 100 to fluently and smoothly perform rotational movement.

Specifically, the first door panel 70 may include a first panel body 71 and a first connecting member 72. The first panel body 71 may include a first connecting surface 711, a second connecting surface 712, and a third connecting surface 713. The first connecting surface 711, the second connecting surface 712, and the third connecting surface 713 are sequentially connected and form a first exterior surface 714 of the first door panel 70. The first exterior surface 714 of the first panel body 71 faces away from the first rotation portion W1. For example, the first panel body 71 may be an arc-shaped panel.

Specifically, the first connecting surface 711 may extend in the X direction. When the first housing 220 and the second housing 230 are unfolded relative to each other, the first connecting surface 711 may be flush with the middle exterior surface 61 of the middle door panel 60. That the first connecting surface 711 may be flush with the middle exterior surface 61 of the middle door panel 60 means that the first connecting surface 711 may be coplanar with the middle exterior surface 61 of the middle door panel 60, or a height difference between the first connecting surface 711 and the middle exterior surface 61 of the middle door panel 60 is within the allowable error range. It may be understood that by making the first connecting surface 711 of the first door panel 70 flush with the middle exterior surface 61 of the middle door panel 60 when the entire shaft is in an unfolded state, an end portion of the first door panel 70 close to the middle door panel 60 can be raised to be flush with the middle door panel 60, so that a gap between the first door panel 70 and the middle door panel 60 can meet an appearance requirement of the electronic device 200, which is conducive to improving refinement of the entire device. When the electronic device 200 is in the folded state, and the first housing 220 and the second housing 230 are closed relative to each other, a part of the first connecting surface 711 may be in contact with the third surface 2222 of the first rear cover 2220.

The second connecting surface 712 may be connected between the first connecting surface 711 and the third connecting surface 713 and extend in a direction arranged inclined to the X direction. An included angle between the second connecting surface 712 and the X direction may be greater than 0° and less than 90°. For example, the second connecting surface 712 may be inclined toward the first rear cover 2220 of the first housing 220. It may be understood that by making the second connecting surface 712 extend in the direction arranged inclined to the X direction, a state where the end of the first door panel 70 close to the middle door panel 60 being raised can be adapted to, and a state where the end of the first door panel 70 away from the middle door panel 60 extends into the first housing 220 can be satisfied. This effectively prevents interference between the first door panel 70 and the rear cover of the first housing 220 during the folding and unfolding of the electronic device 200, and can make opening and closing movement of the first door panel 70 following the first swing arm 20 more smooth, easier, and more stable. When the electronic device 200 is in the intermediate state, and the first housing 220 and the second housing 230 gradually get close to or get away from each other, a part of the second connecting surface 712 may be in contact with the third surface 2222 of the first rear cover 2220.

The third connecting surface 713 may extend in the X direction and be arranged at an interval with the first connecting surface 711 in the direction opposite to the Z direction. When the first housing 220 and the second housing 230 are unfolded relative to each other, the third connecting surface 713 may be located in the first housing 220. For example, the third connecting surface 713 may be arranged parallel to the first connecting surface 711. It may be understood that by arranging the third connecting surface 713 and the first connecting surface 711 at an interval in the Z direction, the end of the first door panel 70 close to the middle door panel 60 and the end of the first door panel 70 away from the middle door panel 60 can have a height difference in the Z direction. This not only fully adapts to a structural form in which the middle door panel 60 and the first rear cover 2220 are arranged on a same layer when the entire device is in the unfolded state, but also ensures control of the gap between the first door panel 70 and the middle door panel 60 and a connection relationship between the first door panel 70 and the first housing 220 during the folding and unfolding of the electronic device 200, providing good reliability. When the electronic device 200 is in the unfolded state, and the first housing 220 and the second housing 230 are unfolded relative to each other, a part of the third connecting surface 713 may be in contact with the third surface 2222 of the first rear cover 2220.

The first panel body 71 may be provided with a third sliding groove 715, the third sliding groove 715 may be located at an end portion of the first panel body 71 in the Y direction, and the third sliding groove 715 is provided for the first sliding body 32 of the first fixing bracket 30 to be mounted therein, to implement a sliding connection between the first door panel 70 and the first fixing bracket 30.

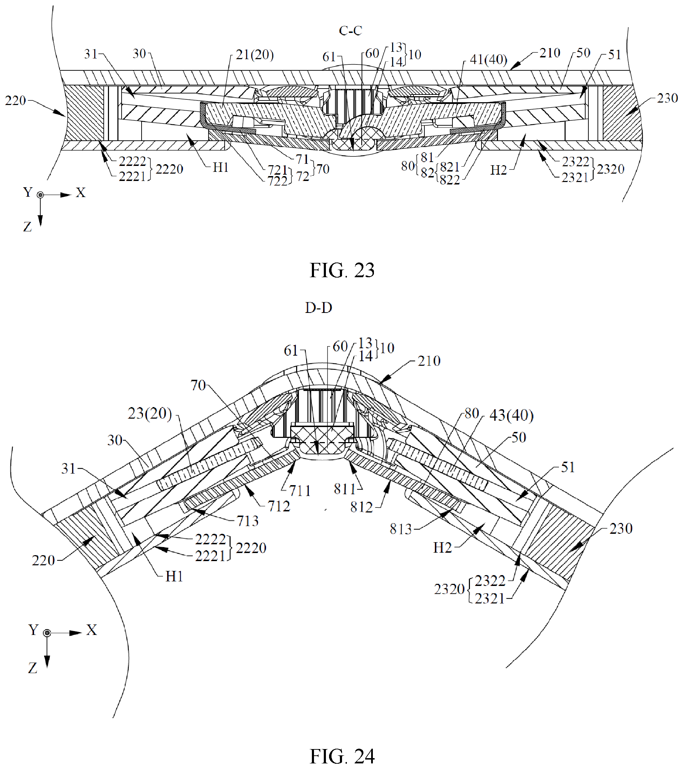

Referring to FIG. 21A, FIG. 21B, FIG. 22, and FIG. 23, FIG. 22 is a diagram of a partial structure of the rotation mechanism 100 shown in FIG. 5 where the first door panel 70 and the first swing arm 20 are assembled and the second door panel 80 and the second swing arm 40 are assembled, and FIG. 23 is a schematic partial cross-sectional view taken along a section line C-C in FIG. 4.

The first connecting member 72 is fixedly connected to a surface of the first panel body 71 facing the first swing arm 20, and the first connecting member 72 is further fixedly connected to the first swing arm 20. For example, the first connecting member 72 may be made of a titanium alloy or stainless steel. The first panel body 71 and the first connecting member 72 may be an integrated structure integrally formed, or the first panel body 71 and the first connecting member 72 may be an integrated structure formed in an assembly manner such as welding or bonding, or the first panel body 71 and the first connecting member 72 may be a split structure. A forming manner of the first door panel 70 may be selected according to an actual application requirement of the first door panel 70. This is not strictly limited. An example in which the first panel body 71 and the first connecting member 72 are a split structure is used below for description. However, it should be understood that this application is not limited thereto.

The first connecting member 72 may include a first connecting body 721 and a first extending portion 722. The first connecting body 721 includes a first surface 7211 and a second surface 7212 that are arranged facing away from each other. The first surface 7211 is a surface of the first connecting body 721 facing the first panel body 71, and the second surface 7212 is a surface of the first connecting body 721 facing the first swing arm 20. The first extending portion 722 is bent and connected to a side of the first connecting body 721, and extends in a direction away from the first connecting body 721. The first extending portion 722 is arranged to protrude from the second surface 7212 of the first connecting body 721.

When the first door panel 70 is fixedly connected to the first swing arm 20, the first panel body 71 covers the first swing arm 20, and the first connecting body 721 of the first connecting member 72 is located between the first swing arm 20 and the first panel body 71. The first extending portion 722 of the first connecting member 72 is located on an outer side of the first swing arm 20, and extends in the direction away from the first connecting body 721.

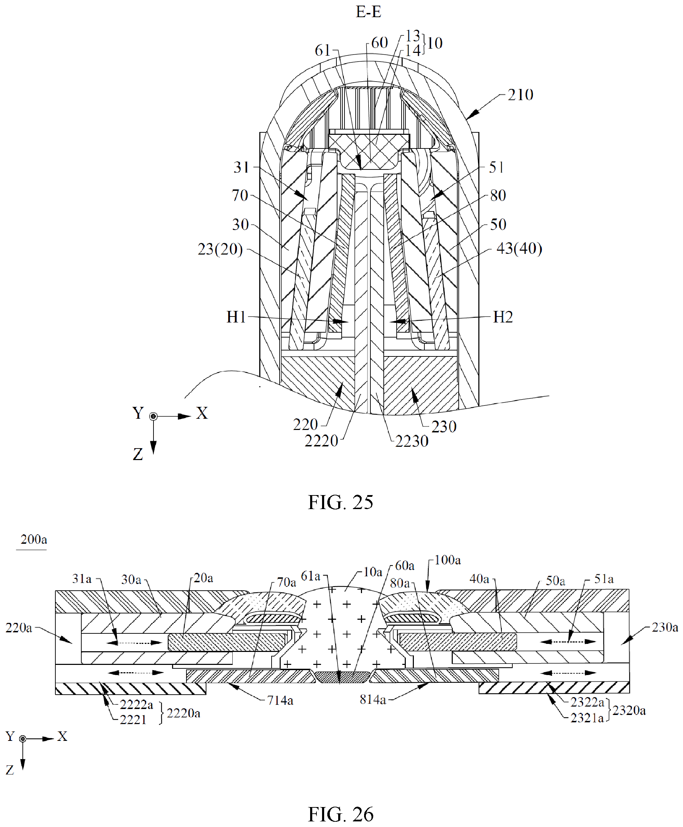

Referring to FIG. 7, FIG. 24, and FIG. 25, FIG. 24 is a schematic partial cross-sectional view taken along a section line D-D in FIG. 3, and FIG. 25 is a schematic partial cross-sectional view taken along a section line E-E in FIG. 2.

A sliding direction of the first door panel 70 relative to the first housing 220 is arranged inclined to the first surface 2221 of the first rear cover 2220. An included angle between the sliding direction of the first door panel 70 relative to the first housing 220 and the first surface 2221 of the first rear cover 2220 is greater than 0° and less than 90°. The sliding direction of the first door panel 70 relative to the first housing 220 may be approximately the same as the sliding direction of the first swing arm 20 relative to the first fixing bracket 30.

It may be understood that because the first door panel 70 is fixedly connected to the first swing arm 20, the first swing arm 20, when sliding relative to the first fixing bracket 30, drives the first door panel 70 to also slide relative to the first housing 220, thereby remaining linkage between the first door panel 70 and the first swing arm 20. The sliding direction of the first door panel 70 relative to the first housing 220 is arranged inclined to the first surface 2221 of the first rear cover 2220, so that the sliding direction of the first door panel 70 relative to the first housing 220 and the sliding direction of the first swing arm 20 relative to the first fixing bracket 30 can remain consistent during the folding and unfolding of the rotation mechanism 100, that is, when the first swing arm 20 slides along an oblique line relative to the first surface 2221 of the first housing 220, the first door panel 70 also slides along an oblique line relative to the first surface 2221 of the first housing 220, thereby optimizing a movement trajectory of the first door panel 70 and avoiding interference with the first rear cover 2220.

A first accommodating groove H1 may be formed between the first fixing bracket 30 and the first rear cover 2220 of the first housing 220, the first door panel 70 can slide in the first accommodating groove H1, and a cross-sectional width of the first accommodating groove H1 in the Z direction gradually increases in a direction from the middle beam 10 to the first housing 220. With this configuration, the first accommodating groove H1 may present a structure configuration of a trapezoidal groove with a gradient in width, which is conducive to providing an action space for a sliding action of the first door panel 70 relative to the first housing 220, and avoids a problem of the first door panel 70 getting stuck due to interference with the first fixing bracket 30 during the sliding, thereby providing good reliability.

Still referring to FIG. 21A and FIG. 21B, the second door panel 80 is fixedly connected to the second swing arm 40, and is slidably connected to the second fixing bracket 50 and the second housing 230. It may be understood that because the second door panel 80 is fixedly connected to the second swing arm 40, and is slidably connected to the second fixing bracket 50 and the second housing 230, when the user folds the second housing 230, the second housing 230 drives the second fixing bracket 50 to rotate, causing the second fixing bracket 50 to rotate relative to the middle beam 10 and slide relative to the second door panel 80. The second swing arm 40 is driven by the second fixing bracket 50 to rotate, thereby driving the second door panel 80 to rotate, implementing rotational movement of the second door panel 80 relative to the middle door panel 60 and sliding movement of the second door panel 80 relative to the second housing 230. In other words, the second fixing bracket 50 can rotate relative to the middle beam 10 and drive the second swing arm 40 to rotate relative to the middle beam 10, and the second swing arm 40 can drive the second door panel 80 to rotate, to form a rotation chain of "second fixing bracket 50-second swing arm 40-second door panel 80-middle beam 10", enabling the rotation mechanism 100 to fluently and smoothly perform rotational movement.

Specifically, the second door panel 80 may include a second panel body 81 and a second connecting member 82. The second panel body 81 may include a fourth connecting surface 811, a fifth connecting surface 812, and a sixth connecting surface 813. The fourth connecting surface 811, the fifth connecting surface 812, and the sixth connecting surface 813 are sequentially connected and form a second exterior surface 814 of the second panel body 81. The second exterior surface 814 of the second panel body 81 faces away from the second rotation portion W2. For example, the second panel body 81 may be an arc-shaped panel.

Specifically, the fourth connecting surface 811 may extend in the X direction. When the first housing 220 and the second housing 230 are unfolded relative to each other, the fourth connecting surface 811 may be flush with the middle exterior surface 61 of the middle door panel 60. That the fourth connecting surface 811 may be flush with the middle exterior surface 61 of the middle door panel 60 means that the fourth connecting surface 811 may be coplanar with the middle exterior surface 61 of the middle door panel 60, or a height difference between the fourth connecting surface 811 and the middle exterior surface 61 of the middle door panel 60 is within the allowable error range. It may be understood that by making the fourth connecting surface 811 of the second door panel 80 flush with the middle exterior surface 61 of the middle door panel 60 when the entire shaft is in an unfolded state, an end portion of the second door panel 80 close to the middle door panel 60 can be raised to be flush with the middle door panel 60, so that a gap between the second door panel 80 and the middle door panel 60 can meet an appearance requirement of the electronic device 200, which is conducive to improving refinement of the entire device. When the electronic device 200 is in the folded state, and the first housing 220 and the second housing 230 are closed relative to each other, a part of the fourth connecting surface 811 may be in contact with the fourth surface 2322 of the second rear cover 2320.

The fifth connecting surface 812 may be connected between the fourth connecting surface 811 and the sixth connecting surface 813 and extend in a direction arranged inclined to the X direction. An included angle between the fifth connecting surface 812 and the X direction may be greater than 0° and less than 90°. For example, the fifth connecting surface 812 may be inclined toward the second rear cover 2320 of the second housing 230. It may be understood that by making the fifth connecting surface 812 extend in the direction arranged inclined to the X direction, a state where the end of the second door panel 80 close to the middle door panel 60 being raised can be adapted to, and a state where the end of the second door panel 80 away from the middle door panel 60 extends into the second housing 230 can be satisfied. This effectively prevents interference between the second door panel 80 and the rear cover of the second housing 230 during the folding and unfolding of the electronic device 200, and can make opening and closing movement of the second door panel 80 following the second swing arm 40 more smooth, easier, and more stable. When the electronic device 200 is in the intermediate state, and the first housing 220 and the second housing 230 gradually get close to or get away from each other, a part of the fifth connecting surface 812 may be in contact with the fourth surface 2322 of the second rear cover 2320.

The sixth connecting surface 813 may be arranged at an interval with the fourth connecting surface 811 in the direction opposite to the Z direction. When the second housing 230 and the second housing 230 are unfolded relative to each other, the sixth connecting surface 813 may be located in the second housing 230. It may be understood that by arranging the fourth connecting surface 811 and the sixth connecting surface 813 at an interval in the Z direction, the end of the second door panel 80 close to the middle door panel 60 and the end of the second door panel 80 away from the middle door panel 60 can have a height difference in the Z direction. This not only fully adapts to a structural form in which the middle door panel 60 and the second rear cover 2320 are arranged on a same layer when the entire device is in the unfolded state, but also ensures control of the gap between the second door panel 80 and the middle door panel 60 and a connection relationship between the second door panel 80 and the second housing 230 during the folding and unfolding of the electronic device 200, providing good reliability. When the electronic device 200 is in the unfolded state, and the first housing 220 and the second housing 230 are unfolded relative to each other, a part of the sixth connecting surface 813 may be in contact with the fourth surface 2322 of the second rear cover 2320.

The second panel body 81 may be provided with a fourth sliding groove 815, the fourth sliding groove 815 may be located at an end portion of the second panel body 81 in the Y direction, and the fourth sliding groove 815 is provided for the second sliding body 52 of the second fixing bracket 50 to be mounted therein, to implement a sliding connection between the second door panel 80 and the second fixing bracket 50.

Referring to FIG. 21A, FIG. 21B, FIG. 22, and FIG. 23, the second connecting member 82 is fixedly connected to a surface of the second panel body 81 facing the second swing arm 40, and the second connecting member 82 is further fixedly connected to the second swing arm 40. For example, the second connecting member 82 may be made of a titanium alloy or stainless steel. The second panel body 81 and the second connecting member 82 may be an integrated structure integrally formed, or the second panel body 81 and the second connecting member 82 may be an integrated structure formed in an assembly manner such as welding or bonding, or the second panel body 81 and the second connecting member 82 may be a split structure. A forming manner of the second door panel 80 may be selected according to an actual application requirement of the second door panel 80. This is not strictly limited. An example in which the second panel body 81 and the second connecting member 82 are a split structure is used below for description. However, it should be understood that this application is not limited thereto.

The second connecting member 82 may include a second connecting body 821 and a second extending portion 822. The second connecting body 821 includes a third surface 8211 and a fourth surface 8212 that are arranged facing away from each other. The third surface 8211 is a surface of the second connecting body 821 facing the second panel body 81, and the fourth surface 8212 is a surface of the second connecting body 821 facing the second swing arm 40. The second extending portion 822 is bent and connected to a side of the second connecting body 821, and extends in a direction away from the second connecting body 821. The second extending portion 822 is arranged to protrude from the fourth surface 8212 of the second connecting body 821.

When the second door panel 80 is fixedly connected to the second swing arm 40, the second panel body 81 covers the second swing arm 40, and the second connecting body 821 of the second connecting member 82 is located between the second swing arm 40 and the second panel body 81. The second extending portion 822 of the second connecting member 82 is located on an outer side of the second swing arm 40, and extends in the direction away from the second connecting body 821.

Referring to FIG. 7, FIG. 24, and FIG. 25, a sliding direction of the second door panel 80 relative to the second housing 230 is arranged inclined to the second surface 2321 of the second rear cover 2320. An included angle between the sliding direction of the second door panel 80 relative to the second housing 230 and the second surface 2321 of the second rear cover 2320 is greater than 0° and less than 90°. The sliding direction of the second door panel 80 relative to the second housing 230 may be approximately the same as the sliding direction of the second swing arm 40 relative to the second fixing bracket 50.

It may be understood that because the second door panel 80 is fixedly connected to the second swing arm 40, the second swing arm 40, when sliding relative to the second fixing bracket 50, drives the second door panel 80 to also slide relative to the second housing 230, thereby remaining linkage between the second door panel 80 and the second swing arm 40. The sliding direction of the second door panel 80 relative to the second housing 230 is arranged inclined to the second surface 2321 of the second rear cover 2320, so that the sliding direction of the second door panel 80 relative to the second housing 230 and the sliding direction of the second swing arm 40 relative to the second fixing bracket 50 can remain consistent during the folding and unfolding of the rotation mechanism 100, that is, when the second swing arm 40 slides along an oblique line relative to the second surface 2321 of the second housing 230, the second door panel 80 also slides along an oblique line relative to the second surface 2321 of the second housing 230, thereby optimizing a movement trajectory of the second door panel 80 and avoiding interference with the second rear cover 2320.

A second accommodation H2 may be formed between the second fixing bracket 50 and the second rear cover 2320 of the second housing 230, the second door panel 80 can slide in the second accommodation H2, and a cross-sectional width of the second accommodation H2 in the Z direction gradually increases in a direction from the middle beam 10 to the second housing 230. With this configuration, the second accommodation H2 may present a structure configuration of a trapezoidal groove with a gradient in width, which is conducive to providing an action space for a sliding action of the second door panel 80 relative to the second housing 230, and avoids a problem of the second door panel 80 getting stuck due to interference with the second fixing bracket 50 during the sliding, thereby providing good reliability.

Based on the foregoing descriptions, it should be understood that when the electronic device 200 rotates from the unfolded state to the folded state, the first housing 220 and the second housing 230 rotate in a direction of getting close to each other, that is, the first housing 220 rotates clockwise and the second housing 230 rotates counterclockwise.

When rotating clockwise, the first housing 220 drives the first fixing bracket 30 to rotate clockwise, thereby driving the first swing arm 20 to rotate clockwise. When rotating clockwise, the first swing arm 20 drives the first door panel 70 to rotate clockwise and move in a direction away from the middle door panel 60, that is, drives the first door panel 70 to move toward the first housing 220.

When rotating counterclockwise, the second housing 230 drives the second fixing bracket 50 to rotate counterclockwise, thereby driving the second swing arm 40 to rotate counterclockwise. When rotating counterclockwise, the second swing arm 40 drives the second door panel 80 to rotate counterclockwise and move in a direction away from the middle door panel 60, that is, drives the second door panel 80 to move toward the second housing 230.

For further understanding of this embodiment of this application, refer to FIG. 7 and FIG. 26. FIG. 26 is a schematic partial cross-sectional view of an electronic device 200a in an unfolded state according to a comparative embodiment. In FIG. 26, a double-headed arrow on a left side indicates a sliding direction of a first swing arm 20a relative to a first fixing bracket 30a and a sliding direction of a first door panel 70a relative to a first housing 220a. A double-headed arrow on a right side indicates a sliding direction of a second swing arm 40a relative to a second fixing bracket 50a and a sliding direction of a second door panel 80a relative to a second housing 230a.

Differences between the comparative embodiment shown in FIG. 26 and the embodiment shown in FIG. 7 include at least several points below.
1. In the comparative embodiment shown in FIG. 26, when the electronic device 200a is in the unfolded state, the first housing 220a and the second housing 230a are unfolded relative to each other, and a middle door panel 60a of a rotation mechanism 100a, a first rear cover 2220a of the first housing 220a, and a second rear cover 2320a of the second housing 230a are not arranged on a same layer, that is, the first rear cover 2220a of the first housing 220a, the second rear cover 2320a of the second housing 230a, and the middle door panel 60a of the rotation mechanism 100a are sequentially arranged in the Z direction.

However, as shown in FIG. 7, in this embodiment of this application, at least a part of the middle door panel 60 of the rotation mechanism 100 is arranged on the same layer with the first rear cover 2220 of the first housing 220 and/or the second rear cover 2320 of the second housing 230, so that compared with a thickness of a middle beam 10a in the comparative embodiment, the thickness of the middle beam 10 is increased. In this way, strength of the rotation mechanism 100 can be improved.

2. In the comparative embodiment shown in FIG. 26, when the electronic device 200a is in the unfolded state, the first housing 220a and the second housing 230a are unfolded relative to each other, and a middle exterior surface 61a of the middle door panel 60a is lower than a third surface 2222a of the first rear cover 2220 and/or a fourth surface 2322a of the second rear cover 2320.

However, as shown in FIG. 7, in this embodiment of this application, when the electronic device 200a is in the unfolded state, the first housing 220a and the second housing 230a are unfolded relative to each other, and the middle exterior surface 61 of the middle door panel 60 is higher than the third surface 2222a of the first rear cover 2220 and/or the fourth surface 2322a of the second rear cover 2320, so that compared with the thickness of the middle beam 10a in the comparative embodiment, the thickness of the middle beam 10 is further increased. When the middle exterior surface 61 of the middle door panel 60 is flush with the first surface 2221 of the first rear cover 2220 and/or the second surface 2321 of the second rear cover 2320, an increment of the thickness of the middle beam 10 is maximized compared with the thickness of the middle beam 10a in the comparative embodiment, thereby greatly improve the strength of the rotation mechanism 100.

3. In the comparative embodiment shown in FIG. 26, when the electronic device 200a is in the unfolded state, the first housing 220a and the second housing 230a are unfolded relative to each other, and a first exterior surface 714a of the first door panel 70a is lower than the third surface 2222a of the first rear cover 2220 and is flush with the middle exterior surface 61 of the middle door panel 60. A second exterior surface 814a of the second door panel 80a is lower than the fourth surface 2322a of the second rear cover 2320 and is flush with the middle exterior surface 61 of the middle door panel 60.

However, as shown in FIG. 7, in this embodiment of this application, when the electronic device 200 is in the unfolded state, the first housing 220 and the second housing 230 are unfolded relative to each other. The first exterior surface 714 of the first door panel 70 is higher than the third surface 2222 of the first rear cover 2220 and is flush with the middle exterior surface 61 of the middle door panel 60. The second exterior surface 814 of the second door panel 80 is higher than the fourth surface 2322 of the second rear cover 2320 and is flush with the middle exterior surface 61 of the middle door panel 60. In this way, compared with the first door panel 70a and the second door panel 80a in the comparative embodiment, end portions of the first door panel 70 and the second door panel 80 that are close to the middle door panel 60 can be raised to be flush with the middle door panel 60, so that the gap between the first door panel 70 and the middle door panel 60 and the gap between the second door panel 80 and the middle door panel 60 can meet the appearance requirement of the electronic device 200, which is conducive to improving refinement of the entire device.

4. In the comparative embodiment shown in FIG. 26, both the sliding direction of the first door panel 70a relative to the first housing 220a and the sliding direction of the first swing arm 20a relative to the first fixing bracket 30a are arranged parallel to a first surface 2221a of the first rear cover 2220a (that is, the X direction). Both the sliding direction of the second door panel 80a relative to the second housing 230a and the sliding direction of the second swing arm 40a relative to the second fixing bracket 50a are arranged parallel to a second surface 2321a of the second rear cover 2320a (that is, the X direction). An extension direction of a first sliding groove 31a of the first fixing bracket 30a is arranged parallel to the first surface 2221a of the first rear cover 2220a (that is, the X direction), and the first sliding groove 31a is provided for the first swing arm 20a to slide therein. An extension direction of a second sliding groove 51a of the second fixing bracket 50a is arranged parallel to the second surface 2321a of the second rear cover 2320a (that is, the X direction), and the second sliding groove 51a is provided for the second swing arm 40a to slide therein.

However, as shown in FIG. 7, in this embodiment of this application, both the sliding direction of the first door panel 70 relative to the first housing 220 and the sliding direction of the first swing arm 20 relative to the first fixing bracket 30 are arranged inclined to the first surface 2221 of the first rear cover 2220 (that is, the X direction), so that the sliding direction of the first door panel 70 relative to the first housing 220 and the sliding direction of the first swing arm 20 relative to the first fixing bracket 30 can remain consistent during the folding and unfolding of the rotation mechanism 100. That is, when the first swing arm 20 slides along an oblique line relative to the first surface 2221 of the first housing 220, the first door panel 70 also slides along an oblique line relative to the first surface 2221 of the first housing 220, thereby optimizing a movement trajectory of the first door panel 70 and avoiding interference with the first rear cover 2220.

Both the sliding direction of the second door panel 80 relative to the second housing 230 and the sliding direction of the second swing arm 40 relative to the second fixing bracket 50 are arranged inclined to the second surface 2321 of the second rear cover 2320 (that is, the X direction), so that the sliding direction of the second door panel 80 relative to the second housing 230 and the sliding direction of the second swing arm 40 relative to the second fixing bracket 50 can remain consistent during the folding and unfolding of the rotation mechanism 100, that is, when the second swing arm 40 slides along an oblique line relative to the second surface 2321 of the second housing 230, the second door panel 80 also slides along an oblique line relative to the second surface 2321 of the second housing 230, thereby optimizing a movement trajectory of the second door panel 80 and avoiding interference with the second rear cover 2320.

In this embodiment, the extension direction of the first sliding groove 31 of the first fixing bracket 30 is arranged inclined to the first surface 2221 of the first rear cover 2220 (that is, the X direction), and the first sliding groove 31 is provided for the first swing arm 20 to slide therein. The extension direction of the second sliding groove 51 of the second fixing bracket 50 is arranged parallel to the second surface 2321 of the second rear cover 2320 (that is, the X direction), and the second sliding groove 51 is provided for the second swing arm 40 to slide therein.

It should be noted that the foregoing listed differences between the comparative embodiment shown in FIG. 26 and the embodiment shown in FIG. 7 are exemplary descriptions provided merely for ease of understanding of the solutions of the embodiments of this application. The differences between the comparative embodiment shown in FIG. 26 and the embodiment shown in FIG. 7 are not limited to the several points above, and details are not described herein again.

The embodiments of this application are described in detail above. The principle and implementations of this application are described herein through specific examples. The descriptions about the embodiments are merely provided to help understand the method and core ideas of this application. Meanwhile, a person of ordinary skill in the art may make modifications to the specific implementations and application scopes according to the ideas of this application. In conclusion, the content of the specification should not be construed as a limitation to this application.

## Claims

1. An electronic device, comprising a first housing, a second housing, and a rotation mechanism, wherein the first housing comprises a first rear cover, the second housing comprises a second rear cover, and the rotation mechanism comprises a middle beam, a first rotation portion, a second rotation portion, and a door panel assembly, wherein
the first rotation portion and the second rotation portion are respectively located on two sides of the middle beam in a width direction, the first rotation portion is rotatably connected to the middle beam, an end of the first rotation portion away from the middle beam extends into the first housing and is fixedly connected to the first housing, the second rotation portion is rotatably connected to the middle beam, and an end of the second rotation portion away from the middle beam extends into the second housing and is fixedly connected to the second housing;
the door panel assembly comprises a middle door panel, a first door panel, and a second door panel, wherein the middle door panel is fixedly connected to the middle beam, the first door panel is fixedly connected to the first rotation portion, an end of the first door panel away from the middle door panel is located in the first housing, the first door panel is further slidably connected to the first housing, the second door panel is fixedly connected to the second rotation portion, an end of the second door panel away from the middle door panel is located in the second housing, and the second door panel is further slidably connected to the second housing; and
when the first housing and the second housing are unfolded relative to each other, at least a part of the middle door panel is arranged on a same layer as the first rear cover and the second rear cover.

2. The electronic device according to claim 1, wherein the first rear cover comprises a first surface, the second rear cover comprises a second surface, and a surface of the middle door panel facing away from the middle beam is a middle exterior surface of the middle door panel; and
when the first housing and the second housing are unfolded relative to each other, the middle exterior surface is flush with the first surface and/or the second surface.

3. The electronic device according to claim 2, wherein the first rear cover further comprises a third surface, and the third surface and the first surface are arranged facing away from each other in a thickness direction of the first rear cover;
the second rear cover further comprises a fourth surface, and the fourth surface and the second surface are arranged facing away from each other in a thickness direction of the second rear cover; and
a surface of the middle beam facing the middle door panel is flush with the third surface and/or the fourth surface.

4. The electronic device according to claim 2 or 3, wherein a sliding direction of the first door panel relative to the first housing is arranged inclined to the first surface; and
a sliding direction of the second door panel relative to the second housing is arranged inclined to the second surface.

5. The electronic device according to claim 2 or 3, wherein the first rotation portion comprises a first swing arm and a first fixing bracket, wherein the first fixing bracket is fixedly connected to the first housing, the first swing arm is fixedly connected to the first door panel, an end of the first swing arm is rotatably connected to the middle beam, another end of the first swing arm is slidably connected to the first fixing bracket, and a sliding direction of the first swing arm relative to the first fixing bracket is arranged inclined to the first surface; and
the second rotation portion comprises a second swing arm and a second fixing bracket, wherein the second fixing bracket is fixedly connected to the second housing, the second swing arm is fixedly connected to the second door panel, an end of the second swing arm is rotatably connected to the middle beam, another end of the second swing arm is slidably connected to the second fixing bracket, and a sliding direction of the second swing arm relative to the second fixing bracket is arranged inclined to the second surface.

6. The electronic device according to claim 5, wherein a first accommodating groove is formed between the first fixing bracket and the first rear cover, the first door panel is slidable in the first accommodating groove, and a cross-sectional width of the first accommodating groove in a thickness direction of the electronic device gradually increases in a direction from the middle beam to the first housing; and
a second accommodating groove is formed between the second fixing bracket and the second rear cover, the second door panel is slidable in the second accommodating groove, and a cross-sectional width of the second accommodating groove in the thickness direction of the electronic device gradually increases in a direction from the middle beam to the second housing.

7. The electronic device according to any one of claims 2 to 6, wherein the first door panel comprises a first exterior surface, the first exterior surface faces away from the first rotation portion, and a part of the first exterior surface is flush with the middle exterior surface when the first housing and the second housing are unfolded relative to each other; and
the second door panel comprises a second exterior surface, the second exterior surface faces away from the second rotation portion, and a part of the second exterior surface is flush with the middle exterior surface when the first housing and the second housing are unfolded relative to each other.

8. The electronic device according to any one of claims 1 to 7, wherein the middle beam comprises a middle beam base and a middle beam cover plate, the middle beam cover plate is connected to a side of the middle beam base, and the middle door panel is connected to a surface of the middle beam cover plate facing away from the middle beam base; and
the middle door panel and the middle beam cover plate are connected to form an integrated structure.

9. The electronic device according to claim 8, wherein the middle beam further comprises a locking member, the locking member penetrates the middle beam base and the middle beam cover plate and is fixedly connected to the middle beam base and the middle beam cover plate, and a part of the locking member is exposed on a surface of the middle beam base facing away from the middle beam cover plate.

10. The electronic device according to claim 9, wherein the rotation mechanism further comprises an in-screen support member, and the in-screen support member is connected to the surface of the middle beam base facing away from the middle beam cover plate and covers the locking member.

11. The electronic device according to any one of claims 1 to 7, wherein the middle beam is an integrated structure.

12. The electronic device according to any one of claims 1 to 11, wherein the electronic device further includes a flexible display screen, wherein the flexible display screen is connected to the first housing, the second housing, and the rotation mechanism and is located on a side of the middle beam facing away from the middle door panel.
